# EUROPEAN PATENT SPECIFICATION

(11) **EP 4 137 781 B1**
(45) Date of publication and mention of the grant of the patent: **04.11.2026**
(21) Application number: 22186678.3
(22) Date of filing: 25.07.2022
(51) Int. Cl.: G01C 21/16, G01S 13/89, G01S 13/87, G01S 13/90, G06V 10/75, G06V 20/17

(54) **NAVIGATION APPARATUS AND POSITION DETERMINATION METHOD**
NAVIGATIONSGERÄT UND POSITIONSBESTIMMUNGSVERFAHREN
APPAREIL DE NAVIGATION ET PROCÉDÉ DE DÉTERMINATION DE POSITION

(30) Priority: 17.08.2021 DE 102021121363
(43) Date of publication of application: 22.02.2023
(73) Proprietor: Airbus Defence and Space GmbH, 82024 Taufkirchen (DE)
(72) Inventor: NEUHAUSER, Tobias, 82024 Taufkirchen (DE)
(74) Representative: LKGLOBAL Partnerschaftsgesellschaft mbB

(56) References cited:
- US-A1- 2010 188 280
- US-B1- 6 218 980
- US-B1- 9 110 170
- GRECO M ET AL: "SAR and InSAR georeferencing algorithms for inertial navigation systems", PHOTONICS APPLICATIONS IN ASTRONOMY, COMMUNICATIONS, INDUSTRY, AND HIGH-ENERGY PHYSICS EXPERIMENTS 2011, SPIE, 1000 20TH ST. BELLINGHAM WA 98225-6705 USA, vol. 8008, no. 1, 6 October 2011 (2011-10-06), pages 1 - 9, XP060022803, DOI: 10.1117/12.904971

## Description

### Technical field

The present invention relates to the field of navigation. In particular, the present invention relates to a navigation apparatus, an aircraft having a navigation apparatus, and a position determination method.

### Technical background

Advances have led to simplifications and improvements in human day-to-day life. Very precisely operating sensors assist humans in many aspects of daily life, relieving them of unwelcome work.

However, technology has also contributed to an increase in safety. Especially in the transportation and traffic sector, technical equipment has taken over many tasks, sometimes outperforming and being more reliable than humans with their sensory organs.

However, this improvement due to the assistance of auxiliary equipment can lead to reliance on the functionality of the latter and to a very quick dependence on this equipment.

In the field of navigation, this may lead to reliance on global navigation satellite systems (GNSS), for example on the Global Positioning System (GPS) system. However, there is in this case reliance on the provision of signals by external operators. Alternative navigation methods are required should these signals be jammed, deactivated, or not be receivable.

Document US 9,709,673 B2 relates to a method and a system for reproducing a synthetic aperture radar image.

US 2010/0188280 A1 describes an airborne vehicle location system with a radar system generating a radar image from the ground surface, and having a memory storing a pre-captured image. A processing system is supposed to identify an object in the pre-captured image defined by unknown location, and a ground object in the radar image. The ground object is correlated with the object defined by the known location in order to then determine a relative location between the one vehicle and identified object, as well as a location of the airborne vehicle based upon the known location of the identified object and the determined relative location.

US 6,218,980 B1 refers to a terrain correlation system used in conjunction with an inertial navigation system of a vehicle to update position information by means of terrain altitude maps that are converted to reference map transformation values which are used in a terrain correlation process to establish a vehicle position.

Greco, M., et al., "SAR and InSAR georeferencing algorithms for inertial navigation systems", Photonics Applications in Astronomy, Communications, Industry, and High Energy Physics Experiments, 2011, Spie, 1000 20th St., Bellingham, WA 98225-6705, USA, (2011-10-06), vol. 8008, no. 1, doi:10.1117/12.904971, pages 1 - 9 (XP060022803), present a concept of SAR and Interferometric SAR (InSAR) georeferencing algorithms dedicated for SAR based augmented Inertial Navigation Architecture (SARINA). This concept is supposed to involve an INS utilizing the SAR as an additional sensor to provide information about the platform trajectory position and compensate an aircraft drift due to Inertial Measurement Unit (IMU) errors, Global Positioning System (GPS) lack of integrity, etc.

US 9,110,170 B1 relates to a terrain aided navigation using multi channel monopulse radar imaging to provide a navigation position update. The monopulse radar transmits a single RF pulse transmission or multiple quick RF pulse train bursts to generate a monopulse radar image that can be correlated with a digital terrain segment to provide navigation updates when requested. The radar has monopulse and off-axis capability that allows for selection of a terrain segment within the radar's search area that will provide a good terrain correlation. The radar measurements are made on a range/Doppler cell-by-cell basis that includes angle information. The cells in the range/Doppler map corresponding to the antenna main beam return are converted into a high resolution (x,y,z) image and correlated to the selected errain segment in the data base reference frame to provide an updated navigation position estimate.

### Description

The problem can be considered that of facilitating effective navigation.

This problem is solved by the subject matter of the independent claims. Further embodiments result from the dependent claims and from the following description. According to an aspect of the present invention, a navigation apparatus is specified, the latter comprising an image capturing device, a template database, a correlation device, an evaluation device, and an output interface.

The image capturing device is configured so that it creates a radar image, for example a synthetic aperture radar (SAR) image, of the surround.

The template database comprises a multiplicity of templates and is configured to provide at least one template which is substantially matched to the radar image and which contains at least one geo-referenced landmark, the at least one geo-referenced landmark being geo-referenced by at least one geo-coordinate. In an example, the geo-coordinate of the geo-referenced landmark can be provided as a landmark metadatum.

The at least one geo-referenced landmark can be understood to mean the entire template or a subset of the template, for example a road crossing, a landscape formation, a point of interest (POI), and/or a building.

The template database may facilitate a selection of one template and/or of at least two templates from a multiplicity of templates in the database, said template(s) matching the radar image. A template may substantially contain features of the radar image, and so it is possible to correlate the template and the radar image. Expressed differently, the template may contain features which are typically detected by a radar system. Consequently, the templates in the template database may be radar-based templates and/or may be based on satellite images.

Should the own position not be known or only be known inaccurately, the selection of a template can be made on the basis of hypotheses, for example on the basis of a probability of currently being at a certain position.

A template may have a certain geographic extent. The geo-coordinate of a template may specify that at least one point within the template is geo-referenced. This fact may be expressed by the geo-referenced landmark. The geo-referenced landmark may serve as an anchor point of the template such that the pose of the template is known as soon as the pose of the geo-referenced landmark is known.

The correlation device is configured to correlate the at least one geo-referenced landmark present in the at least one template with the radar image and to provide a position of the at least one geo-referenced landmark in relation to the radar image. The position of the at least one geo-referenced landmark in relation to the radar image may be a pixel coordinate in the radar image, which pixel coordinate corresponds to the geo-referenced landmark and/or is connected to the geo-referenced landmark. It may be the case that no correlation is possible if an incorrect template has been chosen.

Image processing methods can be used for correlating and/or matching, for example edge detection methods. In one example the radar image can be correlated not only with the landmark present in the at least one geo-referenced template but said radar image can be correlated with the entire template. In an example correlating may be understood to mean that the radar image and the at least one template are brought into correspondence in such a way that the at least one landmark of the template is linked with a corresponding representation of the landmark in the radar image.

To correlate the at least one geo-referenced landmark present in the at least one template, the correlation device may correlate at least the entire template, parts of the template, and/or the landmark of the template with the radar image.

If a hypothesis is not accurate, a correspondence may nevertheless be determinable between template and radar image. Then, a new correlation with other parameters can be carried out in order to obtain a better correspondence.

To obtain a good result within the scope of the correlation, the template is normalized prior to said correlation in order to transfer distortions from the radar image onto the template and/or in order to generate a new template. By way of example, a terrain profile of the template may be used to imitate the distortion of the radar image caused on account of the relative geometry between radar antenna and scanned terrain and on account of the terrain profile of the scanned terrain itself, and hence this distortion may be used to normalize the template.

Expressed differently, since the radar image contains substantially no altitude information, this may mean that the distortion is imitated in the template on the basis of the relative geometry between radar antenna and scanned terrain, that is to say on the basis of known settings and/or image capturing metadata of the image capturing device and on the basis of assumptions in relation to the pose of the image capturing device in relation to the scanned terrain, and on the basis of the altitude information contained explicitly or implicitly in the template.

In an example, the correlation device may provide linking data between the radar image and the template. The linking data provided may include information about the correlated and/or matched template, the matched template being the template of the multiplicity of templates present in the template database which has the best match with the radar image. The template having the best match with the radar image may have a high correlation value. The information about the matched template may for example include a template identification or a template ID, which permits deduction of the geo-coordinates of the template and/or of a pixel coordinate corresponding to the geo-coordinate of the landmark.

Consequently, the result of the correlation in the correlation device may be a pixel coordinate of the radar image, in particular of an SAR image, with the pixel coordinate of the radar image corresponding to the geo-coordinate of the geo-referenced landmark.

As a result of this knowledge about the relationship between the radar image and the template, it is possible to relate the image capturing metadata, for example the settings data of the image capturing device, in particular of the SAR radar, and the measured variables of the image capturing device, for example the range measurement, to the geo-referenced landmark in order thus to obtain navigation information relating to the own position. The image capturing metadata or settings data of the image capturing device may include the squint angle of the radar.

The navigation information or navigation data may be a coordinate value, for example a degree of longitude and degree of latitude value and/or an altitude value above sea level. The navigation information may also include a bearing, speed, and/or position. Furthermore, ranges or angle relationships with respect to objects and/or geo-referenced landmarks may be navigation information. Further, the navigation information may include a squint angle, a range, a geo-coordinate and/or further radar image raw data. Hence, the navigation information may be substantially the information that can be extracted from the radar image. It may additionally also include a position value relating to the aircraft's own value, which is ascertained from the correlation of the radar image with the landmark of the template.

The navigation information, that is to say substantially a set of raw data and/or unprocessed image capturing metadata, can be further processed in a navigation system with further navigation data to form a navigation solution. In this case, the raw data and/or image capturing metadata can be combined with navigation data of a navigation system, for example of an IMU and/or INS. The navigation data of a navigation system can be a position, a speed, a bearing, an acceleration and/or an angular rate. In this case, an angular rate may specify a rotational speed around one of the aircraft axes (longitudinal axis, vertical axis or transverse axis), for example for carrying out a looping or a roll.

The geo-coordinate of the template, that is to say the specification regarding the portion of a map specified by a template, and/or the geo-coordinates of the geo-referenced landmarks contained in the template are known a priori and are stored in the template database.

The evaluation device is adapted so that it determines navigation information of the navigation apparatus, for example a position of the navigation apparatus, from the position related to the radar image, in particular the pixel coordinate of the at least one geo-referenced landmark, from the at least one geo-coordinate and/or the landmark metadata of the at least one geo-referenced landmark in the template and from the image capturing metadata of the image capturing device, and/or from further metadata of the image processing device.

The determined navigation information of the navigation apparatus may substantially be the navigation information of an antenna belonging to the image capturing device. This navigation information can be converted into any desired navigation information, for example the position of the navigation apparatus and/or the own position, by means of offset values before said navigation information is provided.

The output interface is configured to provide the determined navigation information. In this case, the output interface is configured to convert the determined navigation information into a certain output format, both physically, for example by way of a pin layout and/or bus layout, and electrically, in order to provide the determined navigation information for a module and/or equipment for further processing connected to the output interface.

The output interface can be an external and/or an internal interface. In an example, the navigation information can be transferred to an already existing aircraft navigation system and/or inertial navigation system by way of the realization as an external interface.

In another example, the navigation apparatus can be realized as autarkic equipment. In this case, the navigation apparatus and/or a corresponding method may be implemented within an image capturing device in order to be able to continue to output "sharp" SAR images independently of a GNSS. In such a case, the navigation apparatus could be realized as an internal module installed in an SAR radar system and the navigation apparatus or a corresponding navigation method, or the outputs thereof, are concealed outside of the SAR radar system.

The image capturing device, in particular an SAR sensor of the image capturing device, processes a plurality of radar pulses which are output over a certain movement segment in order to create an image of the surround recorded by the radar pulses by correlating the radar pulses on the basis of the time-of-flight, that is to say the in-range component of the radar pulse and the Doppler shift, that is to say the cross-range component of the radar pulse.

The expected normalized Doppler shift corresponds to the rate of change of the range between an antenna of the image capturing device, for example an SAR antenna, and the observed ground point and is therefore a function of the squint angle *θ*, the relative altitude of the SAR antenna above the observed ground point, which is substantially assumed to be a stationary fixed ground point, and the ground speed of the SAR antenna.

However, the relative altitude, that is to say the difference between absolute altitude of the image capturing device, in particular the SAR antenna, and absolute elevation of the ground point, is not known or only insufficiently known since no highly accurate own position can be generated, especially if there is no GNSS available. In general, this may lead to a ground point with a deviating relative elevation in relation to the assumption and hence with a different squint angle than the expected squint angle meeting the expected conditions in respect of range and Doppler shift as the actual ground point present at this position.

However, by way of at least one geo-referenced landmark, the relative altitude between the SAR antenna and the ground point corresponding to the landmark can be determined very accurately and the squint angle can be corrected accordingly. By considering the substantially accurate squint angle it is possible to carry out an even more accurate position determination, for example by repeating the correlation. Expressed differently, by finding a landmark both in the radar image and in the template, it is possible to ascertain the relative altitude of the own position from the absolute elevation of the landmark known from the template and the absolute altitude of the own position, for example measured by means of the barometric altimeter, and the squint angle *θ* can be corrected therefrom.

A method for determining the position of an aircraft by means of a synthetic aperture radar (SAR) may be realized by means of the navigation apparatus. The own position can be ascertained substantially independently using carried along devices, resulting in independence and/or autarky from external service providers. Precise and autonomous navigation which is independent of a GNSS device may be able to be realized in this way.

The setting of the image capturing device may be a metadatum of a multiplicity of image capturing metadata which describe additional parameters describing the prevalent conditions of the image capturing device at the time, or during the time interval, of recording the radar image and which are connected to the image capturing device. Examples of such image capturing metadata are the commanded or set squint angle of the image capturing device, in particular of an antenna or SAR antenna of the image capturing device, the evaluated Doppler shift, the installation location and the alignment of the antenna, the resolution of the radar image, the ascertained range of each individual pixel of the radar image, and/or the altitude and/or speed vector of the image capturing device at the time, or during the time interval, of the recording.

A two-dimensional (2-D) radar image containing substantially no altitude information is generated in the case where the image capturing device is an SAR system.

The navigation apparatus can employ and/or use a synthetic aperture radar (SAR) system as a "navigation sensor". An SAR system is an imaging radar. To this end, navigation information in an SAR image and the associated image capturing metadata may be extracted, corrected, and optionally transformed in order thus to arrive at an accurate and autonomous navigation solution.

The autarkic functionality renders the navigation apparatus independent of GNSS such as GPS, for example, and/or of other external systems and in the process substantially only uses own on-board means and specifications generated by the navigation apparatus itself, for example a speed vector as navigation information. The self-generated specifications or information available on board, or else the information carried along in a template database can also be used to correct errors substantially without needing to assume prior knowledge.

The radar can be operated in a strip map mode or spotlight mode, with the time required to create an SAR image serving the correlation method substantially determining the frequency with which positions, position values and/or position signals are able to be extracted from the SAR image and are able to be used to assist the INS or IMU of the navigation apparatus. In the strip map mode the SAR image grows continuously by virtue of individual image strips being placed against one another, with individual images substantially being time intervals of a large overall image. Thus, for correlation purposes, substantially only one portion of the SAR image is required in order to be able to find a template and/or landmark.

The frequency with which navigation information, a position, a position value, and/or a position signal can be extracted from the SAR image may be of the order of $\frac{1}{20 s}$ or 0.05 Hz, while the position data of an inertial navigation system, for example an INS or IMU, can be provided with a frequency ranging from 10 Hz to 100 Hz or in the range from 10 Hz to 100 Hz. However, the lower generation rate for the navigation information of the navigation apparatus may be sufficient to supply intermediate values for updating the inertial navigation system based on an IMU or INS.

In the strip map mode, the image may be composed of individual strips with a width of 1 pixel and a height of 512 pixels in an example. Either the SAR image can be constructed continuously from the individual strips and used in the correlation device, or said SAR image can be made available to the correlation device once a minimum size has been obtained.

For the spotlight mode, the image capturing device supplies a radar image with virtually any size. The height of the radar image can also be referred to as in-range direction and the width can be referred to as cross-range direction.

The pixels of the radar image substantially contain information relating to the measured range on the basis of the time-of-flight of the radar beam and/or relating to the measured Doppler shift of the radar beam, and/or relating to the intensity of the reflection. This information is used to put together images but a certain amount of experience is required to interpret the images as the reflection behavior of the different objects and distortions in the image, especially on account of the terrain profile, have to be taken into account by the observer of the images.

By way of example, a metal surface may lead to a more intense reflection and may be expressed accordingly intensely on the image, for example by coloring, while the smooth surface of a lake has only a weak back reflection for a radar beam. The SAR image may also appear distorted ("foreshortening") and there may even be inversions of terrain points ("layover") on account of the terrain profile.

Nevertheless, the assumption can be made that the image capturing device may supply a substantially current radar image of the surround, wherein the currentness may depend substantially on the creation time of the image.

In an example, the correlation may be carried out in such a way that the template database substantially provides at least one template and/or a multiplicity of templates, from which the suitable template is subsequently ascertained by means of a correlation method. The templates may relate to different map material, for example satellite images in the visible spectrum, other SAR images, or topographic-cartographic maps. The map material may be divided into segments and may be available in the original or prepared form, or may in particular extract significant landscape features.

Since each template contains one and more geo-referenced landscape features, the position estimated by the navigation apparatus and the estimated uncertainty in relation to said position, and the knowledge about the recording geometry or the relative geometry of the SAR image can be used to make a selection of templates matching the radar image from the multiplicity of templates in the template database and hence accelerate the correlation process as it is not necessary to test all available templates.

By way of example, a geo-referenced landmark may be a street crossing, a lake, and/or the foot of a church which is able to be identified both in the suitable template and in the radar image. The elevation above sea level of such a landmark may for example be available in the form of landmark metadata. The geo-referenced landmark may be an image representation belonging to a physical object. At least two image representations, which may have been obtained in different ways, can be brought into correspondence by the correlation and, in particular, the correlation can establish a connection between these. To this end, the correlation can be carried out by means of an image processing algorithm and/or a matching algorithm in order thus to identify a common landmark. A radar image can be correlated with a template in one example.

According to another aspect of the present invention, the template database is further configured to normalize at least one provided template in relation to the radar image.

The normalization attempts to reconstruct distortions and rotation present in the radar image in the template or transfer said distortions and rotation to the template without knowledge of the actual distortions, in order to thus render the radar image and the template easily comparable and consequently also to increase the identification quality of the at least one landmark. The normalization is carried out by exploiting the image capturing metadata, in particular the recording geometry, the knowledge about the position of the geo-referenced landmark, and terrain information of the surround contained in the template.

According to a further aspect of the present invention, the normalization is implemented by taking account of a distortion present in the radar image in the at least one template.

In order to reconstruct the distortion and rotation present in the radar image in the template, the image capturing metadata may take account of squint angle or altitude of the measuring apparatus, for example as a barometric altitude, as influencing variables for the distortion and rotation of the template in an example. The image capturing metadata may have been recorded using autonomous equipment, that is to say equipment for example carried along in a transportation means such as an aircraft.

In another example, preprocessing and/or a pre-manipulation of the template may be carried out before the correlation in order to reconstruct the distortion and rotation present in the radar image in the template. The normalization can be carried out in this way and, in particular, distortions can be reconstructed in this way in order to render the template better comparable with the radar image.

The templates may be map material such as satellite data, for example, which were substantially recorded in the nadir direction, that is to say with a substantially perpendicular perspective. However, the radar images may have been recorded under a certain angle which deviates from the nadir direction, as a result of which distortions may arise in addition to the terrain profile. Thus, while templates have a representation of the terrain that is easily understandable by humans, the pure radar images may be hardly understandable by an observer, in particular an inexperienced observer, on account of the lack of altitude information.

Since accurate knowledge about the own position would be required for correcting the distortion in the radar image, the correction of the distortion in the radar images is more complicated than the reconstruction of the distortion from the radar image in the template, but it is also theoretically possible.

After also taking account of the distortion of the radar image in the template, the template and the radar image have substantially the same distortion. As a result of this normalization, the distortion of the radar image can be transferred to and reconstructed in the at least one template in order to simplify the correlation process and in order to carry the latter out substantially successfully, and in order to introduce great accuracy and high confidence into the correlation result or matching result.

The at least one setting of the image capturing device or of at least one of the image capturing metadata and/or of at least one of them landmark metadata can be used to normalize the templates.

These image capturing metadata, in particular a setting, and/or the image capturing metadata substantially comprise the commanded squint angle of the SAR system in relation to the speed vector of a movement direction in which the navigation apparatus is moving, or the commanded squint angle of the SAR system in relation to a geodesic coordinate system, for example with the aid of inertial navigation data or with the aid of their hybridized and/or filtered data.

Furthermore, such a setting and/or the image capturing metadata comprise(s) the extent of range of an SAR sensor of the image capturing device. Accordingly, the image capturing metadata may contain the result of a range measurement and the absolute altitude of an SAR antenna.

At least one geo-referenced point and the north/east alignment and the scale of the template are contained in the template and, in particular, in the template metadata, and terrain elevations for the entire template are known; in particular, the respective terrain elevation is known for each individual geo-referenced point present in the template. This may mean that when the template is constructed from pixels, an elevation is assigned to each pixel of the template or an elevation can be assigned to each pixel by way of a terrain database. Not every pixel need to be geo-referenced to this end but the position of the remaining pixels of the template can be calculated in the mapped real world on account of the alignment, the scale of the template, and the at least one geo-referenced point. In addition or as an alternative to pixels, splines with appropriate elevation information may also be present in a template.

As an alternative or in addition to landmark metadata present in the template, the terrain elevations for the entire template can be derived by way of a terrain database contained in the template database or by way of a separate terrain database.

According to another aspect of the present invention, the normalization includes taking account of the terrain profile of the template and/or the testing of various hypotheses about the pose or the testing of various pose hypotheses of the at least one template in relation to the radar image.

The terrain profile may in this case include the elevation values of individual points present in the template. This may also be interpolated elevation values between individual points.

In contrast to the substantially only known relative pose of the radar image, for example the only known imaged surround of the radar image, the terrain profile of the template has a great accuracy or detailed specification in relation to the region observed.

The distortions in the radar image are caused by the relative geometry between the antenna and the real world terrain profile recorded by the antenna. Thus, there can be distortions of the distances between individual ground points, which may lead up to foreshortening.

By means of the known terrain profile of the template, it is possible to ascertain these distortions and the normalization is rendered possible by virtue of the ascertained distortions being transferred into the template, for example by virtue of a template in which the distortions in the radar image have been reconstructed with the aid of the known terrain profile being produced from the template retrieved from the database.

Since the actual position is substantially only known approximately, a plausible position is assumed for the purposes of selecting a template. This assumption can be referred to as the pose hypothesis. The position and the uncertainty of the position are used to determine the pose hypothesis. The position and uncertainty thereof may for example originate from the navigation system and/or from the image capturing device and/or IMU and/or INS.

Since the radar image contains substantially no height information a direct verification, in which there is a determination whether the terrain profile of the terrain scanned by the radar corresponds to the terrain profile of the template, may be substantially impossible.

As a rule, the template may have a structure that is easily understandable by a human observer, for example a satellite image recorded from the nadir direction, in which there are substantially no distortions and in which even an untrained observer can identify objects or structures such as a road crossing. The elevation information of the terrain profile can be provided as landmark meta-information.

The distortion determined from the terrain profile of the template and/or the relative geometry is transferred to the template, and hence a normalized template is produced. If a landmark is found by means of a correlation of the normalized template and the radar image, then the landmark of the template should be distorted post-normalization in such a way that it corresponds to the landmark of the radar image which may have been recorded with a distortion.

Since the template often covers a different region, and in particular a smaller region, than the radar image, the pose hypothesis may also comprise the assumption about the recording geometry, for example the location of the template within the radar image, that is to say the position and/or orientation of the template in the radar image.

If the correlation between template and radar image is unsuccessful, that is to say if the landmark of the template cannot be found in the radar image by means of the correlation, a new assumption about the pose of the template within the radar image is initially made and the correlation is carried out again. If the correlation process remains unsuccessful after a specifiable number of pose hypotheses, a new template is selected.

The pose hypothesis consequently comprises the hypothesis about the recording geometry, that is to say substantially the relative pose and/or the position of the template within the radar image.

To be able to carry out a correlation it may be helpful to implement the distortion during a preprocessing of the template prior to the correlation in order to bring about the normalization between radar image and respective template. Since there is no knowledge about coverage, match and/or correlation with the respective template prior to the correlation, all templates have to be tested or a certain preselection can be made. By way of example, such a preselection can be made by virtue of estimating a position and, further, a speed vector of the navigation apparatus. However, an accurate position is not known since the navigation apparatus is intended to ascertain its navigation data itself.

On account of the approximate position value and, further, the speed vector it is possible to make a selection of the templates to be correlated by virtue of only selecting templates which yield a correspondence with a high probability, the navigation uncertainty provided by the navigation apparatus being able to be used for the purposes of determining the probability. An inertial navigation system can be used to determine the speed vector, for example the SAR radar internal inertial navigation system and/or an external inertial navigation system, for example the onboard inertial navigation system of an aircraft. Determining the position may also consider the fact that the data of the inertial navigation system are processed further, in particular the fact that the data of the INS are fused with other backup sensors. And, in particular, the fact that the drifting data of the INS are supported by the navigation information extracted from the radar image can be taken into account.

The position which may be taken into consideration for the pose hypothesis in particular can be estimated for example proceeding from a start position by way of the speed, the acceleration, the bearing and/or the angular rates of the navigation apparatus. Such data are often acquired autonomously by an inertial navigation system (INS) in the case of an aircraft. Consequently, a position can be determined approximately even substantially without external aids such as a GNSS or GPS. The angular rates of the aircraft specify the rotational speed of the aircraft and are used to hence ascertain the pose. The pose in turn is used to ascertain the effective direction of the acceleration and in turn to ascertain the speed vector.

For as long as the navigation accuracy, in particular the accuracy of the speed vector used for the SAR image, is sufficient to produce a radar image, or to produce a sufficiently sharp radar image for the correlation process, the navigation accuracy can be maintained and even improved using onboard means. In this case, the speed vector used for the SAR image is used to ascertain the squint angle, which relates to the speed vector, in relation to North. An accurate determination of the squint angle can be used to accurately determine the relative geometry.

Expressed differently, the navigation apparatus itself can generate the own position data with great accuracy and feed this back to itself. The navigation apparatus can estimate the full navigation state vector, the position, the speed and the bearing, under the assumption of observability of the states by way of a navigation filter which fuses data of the inertial navigation system, data of the position determination described by the method, and the altitude of an altimeter.

Should there be no information available for determining the position, it would essentially be necessary to search through all available templates and it cannot be a pose hypothesis, or only be a very inaccurate pose hypothesis. If at least an approximate position estimate is present, there can be a plausible selection of the templates to be searched.

With the choice of the pose hypothesis it is possible to keep the number of processing steps for the normalization low and the computational complexity can be reduced if a further assumption is made. In an example the assumption is made for the pose hypothesis that the already selected template, or the geo-referenced point in the template, is substantially located in the image center of the radar image in relation to the in-range axis of the radar image. Thus, not only is a suitable template chosen on account of the assumed position and the relative geometry but the assumption that the geo-referenced point of the template is substantially located in the image center of the radar image in relation to the in-range axis of the radar image is made in relation to the assumption to be made about the relative position in the radar image.

The assumption or the pose hypothesis that the template can substantially be found in the image center of the radar image is very suitable for minimizing the maximum error when using a hypothesis. Should the template actually be contained within the radar image, the maximum error may be half the height of the radar image in relation to the case where the template were located at the outermost edge of the radar image. However, a correspondence between the landmark in the template and the landmark in the radar image, albeit only a very inaccurate correspondence, may nevertheless be identified to a certain degree. However, better assumptions can then be made in the subsequent repetitions of the correlation, and a better correlation would be possible.

Accordingly, the maximum error can be minimized by way of a plurality of pose hypotheses. In particular, the hypotheses comprise the pose or the relative pose of the template in the SAR image, but in a broader sense it is possible for the pose hypothesis to take into account all variables contributing to the alignment and distortions of the radar image.

According to a further aspect of the present invention the template database is configured to provide at least one metadatum, in particular a landmark metadatum, which belongs to the at least one geo-referenced landmark

The landmark metadatum may provide information like a terrain profile which surrounds the respective landmark, but also the structure of the landmark. The templates from the template database may be stored as pixels. Each pixel of the templates may be assigned landmark metadata which define the respective landmark in more detail. By way of example, the tower height may be stored for a tower. However, the landmark metadata may also be terrain data, landscape profile data, elevation of the location above sea level or else the height of the object itself.

The landmark metadatum may also include at least one geo-coordinate of the landmark.

The templates can also be represented as splines. By way of example, the landmark metadata may be stored in a map storage format, such as gpx or obf, for example. By way of example, roads can be represented as splines, which are correlated with the SAR image. In this case, the splines can be interpreted as an edge extraction. The splines are implicitly or explicitly assigned terrain data provided the splines are not created as three-dimensional splines and consequently already contain elevation information.

In an example a radar-free navigation system, for example an inertial navigation system (INS), a main INS, a GNSS navigation system or a navigation system of an aircraft, is connected to the output interface of the navigation apparatus.

By way of example, this navigation system can be a navigation system based on GNSS (global navigation satellite system), in particular a GPS-based navigation system. Should there be a GNSS or GPS navigation outage, the navigation information determined by the navigation apparatus can be fed into the navigation system such that further operation is possible.

When the navigation apparatus is used in an aircraft, the navigation system connected to the navigation apparatus or the inertial navigation system (INS) can be an inertial measurement unit (IMU), that is to say a measurement block which substantially comprises acceleration sensors and angular rate sensors. Such an IMU may be contained in an inertial navigation system (INS). In addition to the IMU, an INS system still comprises a processor for integrating the angular rates and accelerations of the aircraft in order to determine the position, speed and bearing of the aircraft.

An SAR system places greater demands on the accuracy and the update rate in terms of determining the own speed. Hence, it comprises its own INS or a SAR-INS. From this system it is possible to derive the own state in relation to position, speed and bearing, just as it is possible to derive these from the main INS, for example the INS of the aircraft. However, both INS systems may be conditioned in such a way that they are reliant on external backup sensors, which for example supply a position, in order to compensate the position, speed and bearing error that has been increasing since the last update from a backup sensor on account of the integration of the acceleration values and angular rate values.

Hence, the quality of the own position also reduces the further back in time an update of a backup sensor was, under the assumption of observability of the states.

In this case, the own state comprises the position, speed and bearing in relation to the navigation apparatus at a certain time.

In an example, accurate location information can be generated with the aid of the navigation apparatus by the SAR-INS itself. The location information may include the range and the squint angle in relation to a geo-referenced point. Optionally with the aid of the measured altitude, for example by way of a barometric altitude measurement using a barometer, this location information can be transformed into a 3-D position in a Cartesian or curvilinear coordinate system, for example latitude, longitude and altitude. Then, by means of the SAR-INS, the navigation apparatus is able to bridge the time required to generate the next radar image, and a new position determination is implemented by means of the navigation apparatus. Hence, the SAR-INS can feedback its own position data to itself by way of the navigation apparatus if the position is made available via the output interface.

According to another aspect of the present invention, the image capturing device is an SAR system.

According to a further aspect of the present invention the output interface comprises a navigation system for fusing the navigation information, for example an onboard inertial navigation system and/or an image processing device with an SAR inertial navigation system, in particular with an SAR IMU and/or with an SAR-INS.

Hence, SAR-INS navigation data can be merged with the data of the main INS. In particular, navigation information extracted from the radar image and/or the SAR image can be fused with an IMU and/or an INS in a navigation filter. In an example there is a sensor fusion within the navigation apparatus, within the scope of which data of the onboard IMU/INS, data from the SAR and/or altitude data of the barometer or barometric altimeter are fused with one another.

Depending on implementation and/or system architecture, the sensor fusion may also occur in the navigation system, as an alternative or in addition to the fusion in the navigation apparatus.

According to yet a further aspect of the present invention, the image capturing metadata include a squint angle, with the evaluation device being configured to correct the squint angle on account of an altitude error.

According to another aspect of the present invention, the evaluation device accesses elevation information of the landmark derived from the at least one metadatum, a measured altitude of the aircraft, and/or an ascertained height of the aircraft, for the purposes of correcting an error of the squint angle *θ*, which may arise on account of an assumed reference elevation of the terrain. The actual altitude of the aircraft can be measured by means of a barometric altimeter and/or by means of a laser altimeter directed at the ground. By way of example, altitude means the altitude above sea level.

Following the correlation of the radar image with the landmark the actual elevation information of the landmark can be substantially determined. Using this actual elevation information it is then possible to eliminate the error of the squint angle *θ* and ascertain the actual squint angle *θ*. Using this actual squint angle it is then possible to carry out anew a normalization of the template and a subsequent correlation, and even more accurate navigation information and/or an even more accurate position can be determined.

An altitude error may substantially arise on account of the difference between assumed reference elevation of the terrain or of the terrain profile and the actual elevation of the geo-referenced landscape mark. This is because an estimated reference elevation is assumed before the template and the radar image have been correlated.

Following a successful correlation of the at least one geo-referenced landmark present in the at least one template with the radar image, the elevation of the geo-referenced landmark is known very accurately on account of the geo-referencing. Therefore, the altitude of the aircraft is also required in addition to the elevation of the geo-referenced landmark and the assumed reference elevation, said aircraft altitude being ascertained by way of a barometric altimeter and being able to be provided by the navigation system, for example.

Exploiting the available navigation systems, in particular the onboard navigation systems, may facilitate an accurate determination of the own position.

According to yet another aspect of the present invention the evaluation device is configured to ascertain a statistical error of the position.

Since each measurement may have a measurement error which represents a deviation from the true value, this also being true for the determination of the own state, the quality of the navigation solution is described on the basis of the statistical error. These data relating to the error probability may be made available by the output interface. In an example these values may be displayed in order to inform a user about the quality of the ascertained navigation information.

According to a further aspect of the present invention an aircraft and/or an aircraft having the navigation apparatus are specified.

The aircraft can be a manned or unmanned aircraft, in particular an aircraft used to carry out any type of mission. An airplane is an example of an aircraft.

According to a further aspect of the present invention a position determination method is described, which includes a creation of a radar image of a surround and an acquisition of image capturing metadata of an image capturing device, by means of which the radar image of the surround has been recorded.

Further, the method envisages the provision of at least one template which is substantially matched to the radar image and which contains at least one geo-referenced landmark, the at least one geo-referenced landmark being geo-referenced by at least one geo-coordinate.

Moreover, the method carries out a correlation of the at least one geo-referenced landmark present in the at least one template with the radar image and provides a position, in particular a pixel coordinate, of the at least one geo-referenced landmark in relation to the radar image.

Further, the method includes the determination of navigation information, the navigation information being determined from the position of the at least one geo-referenced landmark in relation to the radar image, from the at least one geo-coordinate of the at least one geo-referenced landmark, and from image capturing metadata of the image capturing device. The position in relation to the radar image may be a pixel coordinate in the radar image.

The method accordingly provides the navigation information.

A floppy disk, a hard disk drive, a USB (Universal serial bus) storage device, a RAM (random access memory), a ROM (read-only memory) or an EPROM (erasable programmable read-only memory) is used as a computer-readable storage medium. An ASIC (application-specific integrated circuit) or an FPGA (field programmable gate array) may also be used as a storage medium, just like SSD (solid-state drive) technology or a flash-based storage medium. A web server or a cloud can likewise be used as a storage medium. A communications network, for example the Internet, which may allow program code to be downloaded, may be considered to be a computer readable storage medium. Radio-based network technology and/or wired network technology can be used.

It should be noted that different aspects of the invention were described in relation to different subjects. In particular, some aspects were described in relation to apparatus claims while other aspects were described in relation to method claims. However, from the preceding description and from the subsequent description, it is evident to a person skilled in the art that in addition to each combination of features belonging to one category of subjects the disclosure of this text is also considered to include every combination of features relating to different categories of subjects unless something else is described. In particular, combinations between features of apparatus claims and features of method claims should be considered disclosed.

### Brief description of the figures

Exemplary embodiments are described in more detail below with reference to the appended drawings. The illustrations are schematic and not to scale. Identical reference signs refer to identical or similar elements. In the drawings:
- **Fig. 1**: shows a block diagram of a navigation apparatus according to the present invention.
- **Fig. 2**: shows an overview image for determining an in-range resolution of a radar image in an aircraft, for better understanding of the present invention.
- **Fig. 3**: shows an overview image for determining a cross-range resolution of a radar image by means of a Doppler shift in an aircraft, for better understanding of the present invention.
- **Fig. 4**: shows a flowchart of a position determination method according to the present invention.
- **Fig. 5**: shows the correlation between an SAR image and a template according to the present invention.
- **Fig. 6**: shows a model for determining distortions in an SAR image according to the present invention.
- **Fig. 7**: shows an arrangement of different pixels in a template according to the present invention.
- **Fig. 8**: shows the relative position of the template in relation to the SAR image in the case of a correlation according to the present invention.
- **Fig. 9**: shows a plan view of the template in relation to a movement direction according to the present invention.
- **Fig. 10**: shows a radar beam in an altitude-ground range diagram according to the present invention.
- **Fig. 11**: shows a/the ground component of a radar beam in a north-east diagram at the flight altitude according to the present invention.

### Detailed description

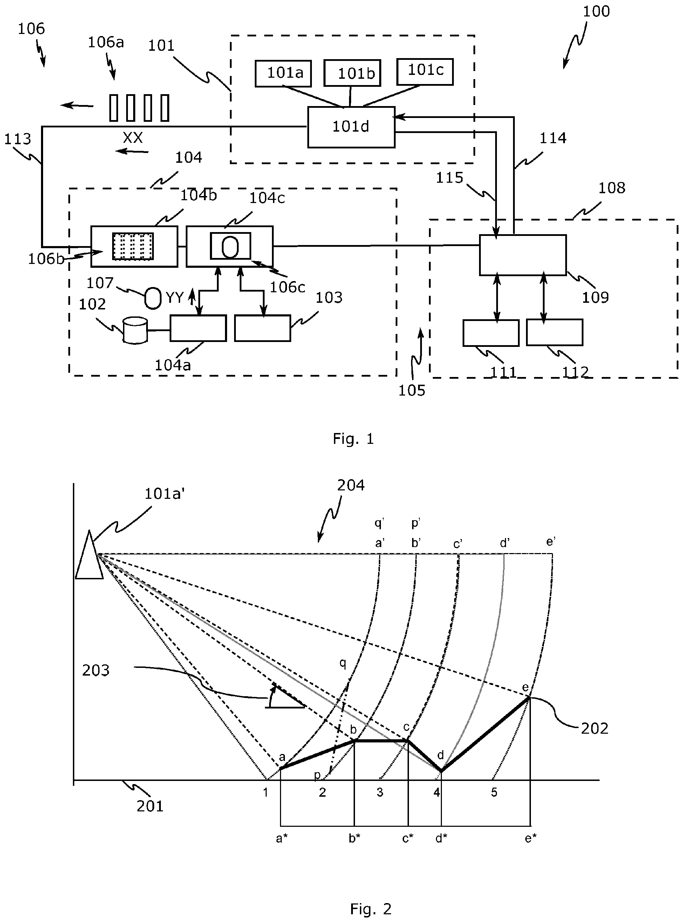

Figure 1 shows a block diagram of a navigation apparatus 100 according to the present invention.

The navigation apparatus 100 comprises an image capturing device 101, a template database 102, a correlation device 103, an evaluation device 104, and an output interface 105, with the image capturing device 101 being configured to create a radar image 106 of a surround. In this case, the radar image 106 may be a juxtaposition of a multiplicity of SAR strips 106a in the case of a stripmap mode and the radar image 106 directly in the spotlight mode. The radar image 106, for example an SAR radar image 106, comprises a multiplicity of scanned pixels, which are addressed by pixel coordinates.

Initially, SAR strips 106a generated by means of the SAR raw data acquiring device 101a or by means of the SAR sensor 101a are transmitted together with image capturing metadata XX or settings metadata XX to the evaluation device 104. The image capturing metadata XX or settings metadata XX substantially include a setting of the image capturing device 101. These settings metadata XX may provide at least some of the relative geometry used for imitating the distortion. In addition to the template database 102 and the correlation device 103, the evaluation device 104 comprises further submodules 104a, 104b, 104c, which may be realized as hardware and/or software modules, and which adopt specific tasks of the evaluation device 104.

By way of example, the image generating device 104b receives the strip individual images 106a and assembles these to form an SAR image 106b. Moreover, it also receives the image capturing metadata XX.

All modules the navigation apparatus 100 have a redundant design in an example. This can reduce the outage probability of the navigation apparatus 100.

The template database 102 is configured such that it provides at least one template 107 substantially matching the radar image 106a, 106b, or a matching template 107 together with at least one geo-referenced landmark 501 and, in particular, the landmark metadata YY thereof. At least one geo-referenced landmark 501 and/or an associated template 107 can be selected by means of the feature selection device 104a. A piece of landmark meta-information YY from a plurality of available pieces of landmark meta-information YY may be assigned to the geo-referenced landmark 501.

The at least one geo-reference landmark 501 is geo-referenced by way of at least one geo-coordinate. The geo-referenced landmark 501 can be transmitted to the image navigation device 104c together with further requested metadata YY as landmark metadatum YY and/or as landmark metadata YY.

With the aid of the correlation device 103, the image navigation device 104c is able to correlate the template 107, in particular the at least one geo-referenced landmark 501 present in the at least one template 107, with the radar image 106c and to provide the at least one geo-coordinate belonging to the at least one geo-referenced landmark 501. As a result of the correlation, the geo-coordinate of the geo-referenced landmark 501 can be linked with a pixel coordinate from the radar image 106.

For correlation purposes, a homographic transformation derived from the SAR radar image 106b prepared by the image generating device 104b may be applied to the provided template 107 in an example, with common features in the template 107 and the radar image 106 being found in this way. The image 106c processed in this way may highlight common features, for example a landmark 501 present both in the SAR radar image 106 and in the template 107.

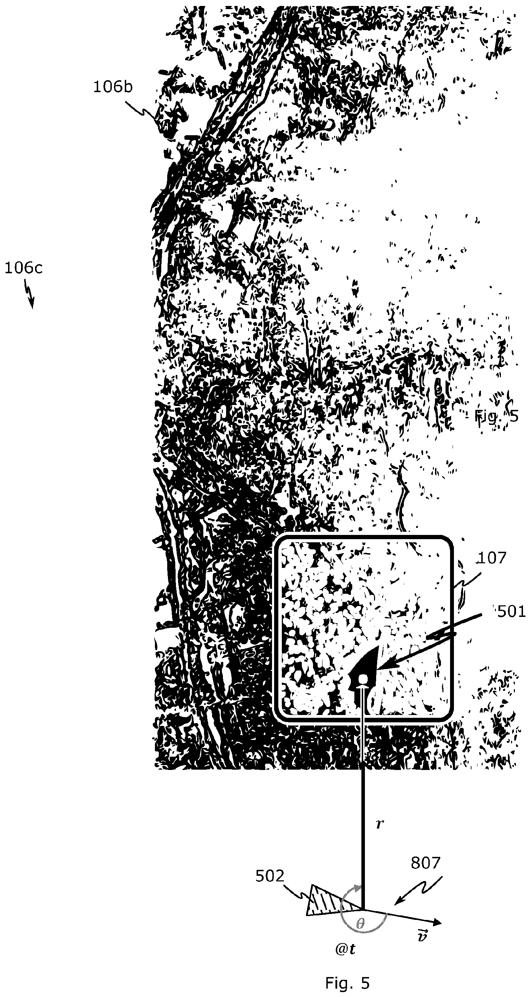

In the processed image 106c, the template 107 and the SAR radar image 106b have been overlaid so that a geo-reference landmark 501 present in both images is located on top of itself, as depicted in figure 5. The processed image 106c may serve for illustrative purposes to determine whether the correlation was successful, but it need not necessarily be generated. In an example, the result of a correlation may be executed purely mathematically as a computational operation, without an image 106c in fact being produced.

An own position, that is to say navigation information, in particular the position at which the navigation apparatus 100 is located, can be determined from the geo-referenced landmark 501 and the associated image capturing metadata XX of the radar image in combination with further measured values, for example an altitude measured value, which may be supplied by the onboard navigation system 108. In a further example, the range and angle information contained in the metadata XX of the radar image 106b which is available in relation to the geo-referenced point after the correlation method, for example a squint angle, is directly processed in the navigation filter. From a multiplicity of metadata and/or measurement values, a navigation filter selects the ones currently required. A navigation filter may be fixedly set and select a specifiable group of data. In an example, a navigation filter may fuse navigation information from the evaluation device 104 and/or from the navigation system 108.

Expressed differently, the evaluation device 104 is configured to determine a position of the navigation apparatus 100 from the at least one geo-coordinate of the at least one geo-referenced landmark 501 and from a setting of the image capturing device XX, which may have been provided as an image capturing metadatum XX for example. The geo-coordinate may be provided as a landmark metadatum YY.

This determined and/or ascertained position and/or the correlated metadata of the radar image 106b, in particular the range and angle information related to the geo-referenced point, can be provided together with the geo-coordinates of the geo-referenced point at the output interface 105 in a specifiable data format.

This may mean that the correlation device 103 is configured to correlate the at least one geo-referenced landmark 501 present in the at least one template 107 with the radar image 106b and to provide a position of the at least one geo-referenced landmark 501 in relation to the radar image 106b.

The result of the correlation is a pixel coordinate of the SAR image 106b, with the pixel coordinate corresponding to the geo-referenced landmark 501.

This knowledge allows the meta-information XX or settings data of the SAR sensor 101a, for example the squint angle and the measured variables thereof, for example a range measurement, to be related to the geo-referenced landmark 501 in order thus to obtain navigation information relating to the own position.

The evaluation device 104 is configured in such a way that it determines navigation information of the navigation apparatus 100 from the position of the at least one geo-referenced landmark 501 in relation to the radar image 106b, that is to say the pixel coordinate, from the at least one geo-coordinate of the at least one geo-referenced landmark 501, and from image capturing metadata XX of the image capturing device 101.

The output interface 105 is configured to provide the determined navigation information internally or externally.

In the example depicted in figure 1, the navigation apparatus 100 is connected to a navigation system 108 of an aircraft, for example an INS and/or an IMU 108. However, by way of a suitable interface 105 it may be connected to any desired navigation system 108 of any desired transportation means. Consequently, the navigation apparatus 100 may also comprise a navigation system 108.

Should the position data be provided by way of the interface 105, the navigation apparatus 100 can substantially replace a GNSS system and can adopt the function of a position sensor.

Should there be an outage of or interference in a GNSS, the navigation can be continued in this way with the aid of the navigation apparatus 100 on account of the similar information content.

The output interface 105 is essentially connected to a navigation module 109 of the navigation system 108, which comprises a navigation filter, for example an extended Kalman filter, in order to be fused with other sensor data, essentially an INS and/or an IMU and of an altimeter, in particular a barometric altimeter.

The navigation system 108 comprises a position estimating device 111 and a backup sensor device 112. The position estimating device 111 is configured to ascertain an estimated value of the position, for a time at which the evaluation device 104 supplies no data, for example while an SAR radar image 106b is created from the SAR strips 106a. The duration of this time may extend until the adjustable number of SAR strips provided for the image width of the SAR image 106b in the cross-range direction has been acquired.

In this case, the position estimating device 111 derives the estimated position from the navigation data of the navigation system 108, for example from inertial sensor data such as an INS or an IMU. Navigation data of further backup sensor systems, for example data of an altimeter, is supplied by the backup sensor device 112.

However, the navigation data may at least in part also be provided by the image capturing device 101 itself. This is because for the purposes of creating the SAR strips106a, the image capturing device 101 can comprise its own attitude detecting device 101b and its own raw data INS acquiring device 101c in addition to the SAR raw data acquiring device 101a.

An SAR system 101 inherently comprises an SAR-own navigation system 101c having an INS or IMU, a GNSS receiver, and optionally an own altimeter in order to carry out the movement compensation with a very high update rate and low latency.

The SAR-own navigation system 101c operates independently of the onboard navigation system 108. The onboard navigation system 108 is that navigation system of the aircraft, which may comprise further backup sensors, for example terrain-referenced navigation (TRN).

In this case, the onboard navigation system 108, in particular the INS/IMU, calculates correction data for the navigation data of the SAR system 101, with the correction data being applied by the navigation apparatus 100 for the purposes of correcting the navigation data, for example the bearing, the position, and in particular the speed. The functional setup may also be designed such that the SAR-own navigation system of the SAR system 101 independently calculates the corrections to the navigation data on the basis of the navigation data 105 which correspond to the navigation information "extracted" from the SAR image.

The SAR raw data acquiring device 101a may comprise the radar sensor or SAR sensor 101a and may substantially put together the range data of the radar sensor 101a measured by the radar beam to form the SAR strips 106a. The altitude detecting device 101b is configured to detect and provide the barometric altitude of the navigation apparatus 100. The INS acquiring device 101c is configured to provide movement data such as bearing, angular rates, position, speed and acceleration, which for example are used for a movement compensation required in an SAR system 101. A movement compensation attempts to compensate a flight not in a straight line. This may be used when producing a virtual antenna array, within the scope of which the recordings of a single antenna are juxtaposed in time in order to form a recording of a large antenna array. In this case, the movement compensation may assist with juxtaposing the individual recordings of the antenna lined-up in time despite a flight that is not in a straight line. In the image capturing device 101, all data are merged and provided in the SAR control device 101d. The image capturing metadata XX are also generated here, substantially from the settings data of the SAR sensor 101a.

The data 106a, XX are provided to the evaluation device 100 via the connecting line 113.

Via the connecting line 114, the image capturing device 101 in turn receives navigation data from the navigation system 108 and optionally also from the evaluation device 104. Thus, position data generated by the evaluation device 104 or the data further processed by the navigation module 108 based on the data from the evaluation device 104 can be fed back to the image capturing device 101 in order to correct the navigation data based on the INS 101c, which have degraded since the last provision of backup sensor data.

Position data are transmitted from the evaluation device 104 to the navigation system 108 via the image capturing device 101. The connecting lines 113, 114, 115 can be part of a communications bus system, for example an aircraft bus system.

A method for determining the position of an aircraft by means of a synthetic aperture radar (SAR) can be carried out by means of the navigation apparatus 100.

A synthetic aperture radar (SAR) is an imaging radar which can be used as a "navigation sensor" by means of the navigation apparatus 100. An SAR image 106b and the associated image capturing metadata XX, for example the range of the individual pixels and/or the setting of the SAR sensor 101a, serve as a basis for navigation information extraction, correction and optional transformation, in order thus to arrive at an accurate and autonomous navigation solution.

The navigation apparatus 100 can operate autarkically, that is to say substantially independently of GPS or other external systems 108. In this case, it essentially only uses settings of the image capturing device 101, for example the squint angle, a speed value, or an implemented measurement by the image capturing device 101, for example a range measurement, as navigation information and for the purposes of correcting errors. Substantially no prior knowledge may be required in this case. Hence, the navigation apparatus 100 can readily adopt the functionality should an existing position determination system 108, for example a GPS system, develop a fault.

A synthetic aperture radar (SAR) is an imaging radar and supplies a black and white image 106, with the brightness reflecting the received power. Substantially no altitude information is contained in the radar image 106.

This image 106 is created in several stages in the stripmap mode while the image of the scanned region is provided as a whole in the spotlight mode.

In the strip map mode, an SAR image strip 106a is initially produced by sampling a reflected and in turn received radar signal at fixed sampling times relative to the emission time. This sampling at fixed times, which substantially correspond to the height of the SAR strip 106a, corresponds to a time-of-flight measurement. A unique range can thus be assigned to each sampling time and hence each pixel of the SAR strip 106a.

The sampling frequency may determine the in-range height of the SAR strips 106a.

Expressed differently, a distinction should be made between two modes of operation of the SAR sensor 101a, the stripmap mode and the spotlight mode. In the case of the stripmap mode, the SAR image is continually expanded with the scanned and/or swept terrain, in particular using the reflection data produced by the terrain.

In the case of the spotlight mode, the SAR raw data acquiring device 101a is "aligned" at a certain point or spot and the latter is observed over a relatively long distance, for example a flight route. In the process, the distance traveled is compensated by calculation by way of a movement compensation in order to compensate a movement of the SAR raw data acquiring device 101a, in particular compensate the movement of an antenna from which the radar beams are emitted.

In relation to the utilized physical measurement principle of the time-of-flight measurement, the two SAR modes are substantially identical. However, on account of the longer "exposure time" caused by the alignment at one point, the spotlight mode allows generation of an SAR image 106b with a higher resolution than in the stripmap mode.

As the movement advances, the SAR 101a places the physical antenna virtually next to the previous antenna position in relation to the previously emitted radar pulse, in order thus to form a synthetic antenna array. In particular, the produced SAR strips 106a may be computationally juxtaposed in order to produce the SAR image 106b.

In the case of the spotlight mode, the observation angle or squint angle in relation to a point stationary with respect to ground changes continuously, as a result of which likewise there is continuous change in the Doppler shift. The radar pulses emitted over the flight route are correlated accordingly by way of the expected Doppler shifts. A high resolution is obtained on account of the large distance covered and the long synthetic antenna array formed in this manner.

The production of an SAR image 106, both in the stripmap and in the spotlight mode, requires a very accurate speed value and/or position value, generated by the altitude detecting device 101b, the INS acquiring device 101c and/or the GNSS contained in the image capturing device 101. As a rule, the very accurate speed value may be generated by a GNSS system, in particular a GPS of the onboard navigation system 108. In the case of a GNSS outage, for example on account of a fault, it is necessary to use alternative navigation data, for example as are generated by the evaluation device 104.

The resolution in the flight direction is implemented by the observation of the Doppler shift of the received radar pulse and the comparison of the expected Doppler shift on account of the speed of the aircraft and the relative geometry between SAR antenna 101a' and the observed surround, which is why a very accurate speed value is required.

Figure 2 shows an overview image for determining an in-range resolution of a radar image 106 in an aircraft, for better understanding of the present invention.

An altitude value is added in an aircraft, and so the radar beam strikes objects to be observed substantially at an angle.

All that is depicted of the navigation apparatus 100 in figure 2 is the antenna 101a' of the SAR raw data acquiring device 101a. The direction of movement, that is to say the flight direction, is directed into the plane of the drawing. The "in-range" resolution, that is to say substantially the direction at right angles to the flight direction, is acquired by means of a time-of-flight measurement. For the time-of-flight measurement, radar beams 204 are emitted by the antenna 101a' and the beams reflected from the terrain profile 202 are read.

An SAR image 106b, in particular an SAR strip 106a, contains substantially no information about the depression angle 203, that is to say about the angle of incidence and angle of reflection of the reflected and received radar signal. Only the range is measured:
The read times of the received SAR pulse are at certain times in relation to the emission time, corresponding to a certain range. For the case depicted in figure 2, the pulses are set such that equidistant distances emerge between points 1, 2, 3, 4, 5 at the reference elevation 201.

The terrain 202 is scanned at points a, b, c, e. Terrain point d cannot be scanned as is shadowed by terrain point c. It is evident that the SAR image a', b', c', d', e' does not correspond to the actual distances between the points a, b, c, d, e, or the horizontal distances a*, b*, c*, d*, e*. A distortion arises. This distortion between the actual distances between points a, b, c, e and the horizontal distances a*, b*, c*, d*, e* is referred to as foreshortening.

However, this distortion makes a comparison with images difficult, the images for example having been recorded in the nadir direction and having been stored as a template 107.

As shown using the example of terrain points p, q and the images p', q' thereof, terrain points may also be inverted in an SAR image 106b, that is to say a terrain point p, which is located in front of another terrain point q actually in relation to the antenna 101a', may, as image point p', be located behind the image point q' of the other terrain point in the image or in the range image 106a.

Since the SAR strip image 106a is distorted by the foreshortening, right up to the inversion of terrain points by the layover, it is difficult to interpret the raw data SAR strip image 106a without processing.

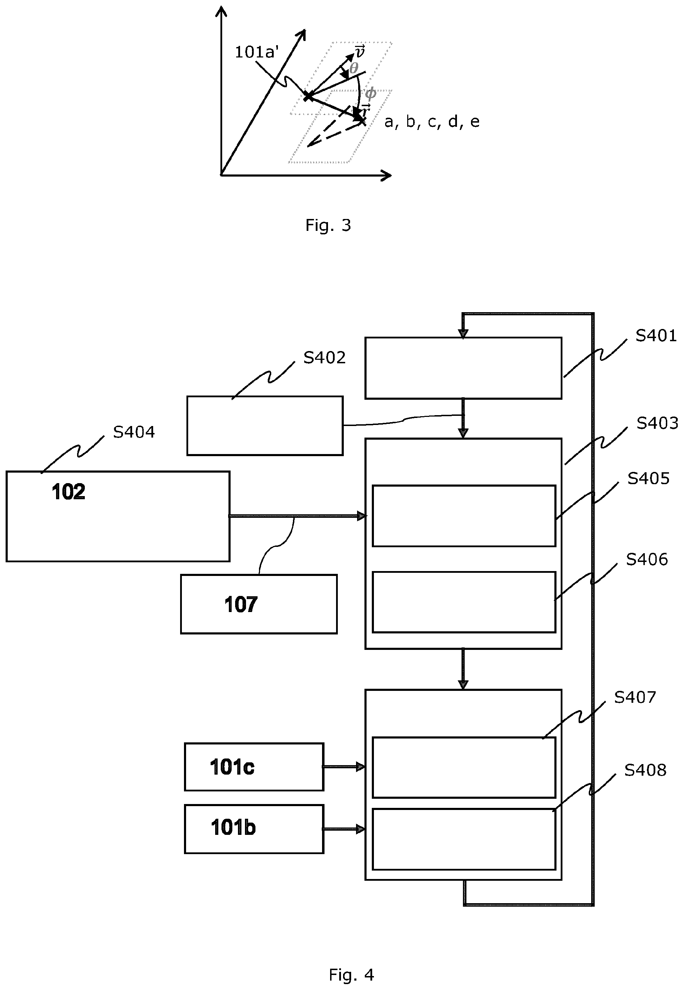

Figure 3 shows an overview image for determining a cross-range resolution of a radar image 106 by way of the Doppler shift in an aircraft, for better understanding of the present invention.

The resolution in the flight direction, that is to say the resolution along the speed vector v, what is known as a cross-range resolution, arises on account of the Doppler shift. The Doppler shift is calculated as follows: ${f}_{D} = 2 \frac{dr}{dt} \frac{1}{λ}$

Where λ reflects the wavelength of the radar 101a and r describes the range between the SAR antenna 101a' and the respective ground point a, b, c, d, e on the ground. Accordingly, $\frac{dr}{dt}$ represents the rate of change of the range.

Under the assumption of an unaccelerated horizontal flight with a speed v and under the assumption that the point to be observed on the ground a, b, c, d, e is visible from the view of the SAR antenna 101a' at a squint angle *θ* and a depression angle *ϕ* with respect to the speed vector v, the formula for the Doppler shift can be simplified as follows: ${f}_{D} = 2 cos \left(ϕ\right) cos \left(ϕ\right) v \frac{1}{λ}$

It is still necessary to consider the altitude error and its effect on the squint angle. The altitude error may arise since an assumed reference elevation 201 of the terrain 202 and/or of the terrain profile 202 is assumed for as long as the navigation information is unknown.

Under the assumption of a flat terrain, the SAR system 101 expects a Doppler shift of *f_{D,est}* on the basis of the speed *vₑₛₜ* estimated by the INS acquiring device 101c or by the navigation module 108, the commanded squint angle *θ_{cmd}* and the absolute height estimated by the height detecting device 101b and the estimated heights *hₑₛₜ* above the ground points a, b, c, d, e derived therefrom: ${f}_{D , est} = 2 cos \left({sin}^{- 1}\left(\frac{{h}_{est}}{r}\right)\right) cos \left({θ}_{cmd}\right) {v}_{est} \frac{1}{λ}$

The squint angle is substantially independent of the orientation or alignment of the antenna 101a'. The orientation of the antenna is irrelevant to an SAR system 101, apart from the antenna gain on account of the antenna lobe, which influences the SNR (signal-to-noise ratio).

The SAR system 101 only processes those received radar signals 204 that have a Doppler shift of *f_{D,est}.*

An individual radar pulse is considered below for ease of understanding. The emitted radar pulse is reflected by many ground points (back-scattering) and thus returns back to the radar antenna 101a'. The in-range resolution is achieved by sampling the radar pulse at the set sampling times, according to the principle of the time-of-flight measurement. The time-of-flight condition is satisfied by all ground points that have the same distance from the SAR antenna 101a'. Graphically, this corresponds to a circular segment for a flat terrain. More information is required, specifically the Doppler shift, to select only a single ground point from this multiplicity of ground points, and hence to achieve the cross-range resolution. In principle, the Doppler shift can be chosen as desired. Should a certain ground point be intended to be observed or should a certain squint angle be desired, an appropriate Doppler shift can be calculated using the formula above and the SAR system 101 accordingly only processes these components of the received radar pulse.

On account of the error *Δh* in altitude estimate, which comprises both the altitude error in respect of the own altitude and the elevation error in respect of the scanned ground point and the assumed reference elevation, however, a different ground point a, b, c, d, e with the parameters r, *hₜᵣᵤₑ, θₜᵣᵤₑ* produces the expected Doppler shift *f_{D,true}.* Under the assumption that the estimated speed is error-free (*vₑₛₜ = vₜᵣᵤₑ*), the ground point (*r, hₜᵣᵤₑ, θₜᵣᵤₑ*) thus generates the expected Doppler shift, with the range r or slant range r measured by the radar beam 204 remaining unchanged and the actual altitude difference being *hₜᵣᵤₑ = hₑₛₜ + Δh.* Thus, the actual squint angle *θₜᵣᵤₑ* = *θ_{cmd}* + *Δθ* differs from the commanded or set squint angle *θ_{cmd}* by the squint angle error *Δθ*: $\begin{matrix}{f}_{D , est} = 2 cos \left({sin}^{- 1}\left(\frac{{h}_{est}}{r}\right)\right) cos \left({θ}_{cmd}\right) {v}_{est} \frac{1}{λ} \\ = 2 cos \left({sin}^{- 1}\left(\frac{{h}_{est} + Δh}{r}\right)\right) cos \left({θ}_{cmd}+Δθ\right) {v}_{true} \frac{1}{λ} = {f}_{D , true} \\ Δθ = {cos}^{- 1} \left(cos\left({θ}_{cmd}\right)\frac{\sqrt{1 - {\left(\frac{{h}_{est}}{r}\right)}^{2}}}{\sqrt{1 - {\left(\frac{{h}_{est} + Δh}{r}\right)}^{2}}}\right) - {θ}_{cmd} \\ = {cos}^{- 1} \left(cos\left({θ}_{cmd}\right)\frac{\sqrt{{r}^{2} - {h}_{est}^{2}}}{\sqrt{{r}^{2} - {\left({h}_{est}+Δh\right)}^{2}}}\right) - {θ}_{cmd}\end{matrix}$

In addition to the altitude error *Δh*, it is also necessary to consider the speed error *Δv* and its effect on the squint angle *θ*.

For the purposes of this speed error consideration, there is an examination of the influence that the absolute estimated speed has an error of *Δv*, such that *vₜᵣᵤₑ = vₑₛₜ + Δv* applies.

Once again, a different ground point (*r, hₜᵣᵤₑ, θₜᵣᵤₑ*) to the actually expected ground point a, b, c, d, e generates the same expected Doppler shift *f_{D,true}.* The assumption is made that the elevation above the ground point a, b, c, d, e is error-free *hₑₛₜ = hₜᵣᵤₑ.*

An error-free altitude measurement is assumed in this theoretical consideration in order to be able to mathematically describe the error components. The altitude should be understood to be the altitude above the ground point to be observed, which is why two items of altitude data are required. The one altitude value is the own altitude, which may be ascertained by means of a barometric altimeter, with a measurement error possibly being included. The other elevation value is the elevation of the ground point to be observed, which is usually unknown and/or only known approximately.

However, the height of the terrain point may be ascertainable by means of the templates 107 and, in particular, the landmark metadata YY contained therein.

The following arises: $\begin{matrix}{f}_{D , est} = 2 cos \left({sin}^{- 1}\left(\frac{{h}_{est}}{r}\right)\right) cos \left({θ}_{cmd}\right) {v}_{est} \frac{1}{λ} \\ = 2 cos \left({sin}^{- 1}\left(\frac{{h}_{true}}{r}\right)\right) cos \left({θ}_{cmd}+Δθ\right) \left({v}_{est}+Δv\right) \frac{1}{λ} = {f}_{D , true}\end{matrix}$ $Δθ = {cos}^{- 1} \left({θ}_{cmd}\frac{{v}_{est}}{{v}_{est} + Δv}\right) - {θ}_{cmd}$

Should the estimated speed vector *vₑₛₜ* be rotated in relation to the true speed vector *v_{crue}* through *β* in the horizontal plane, a squint angle error of *Δθ* = *β* is obtained.

Figure 4 shows a flowchart of a position determination method according to the present invention.

In state S401, the SAR system 101 generates an SAR stripe image 106a, from which the SAR image 106b is calculated, in each case with the commanded squint angle *θ_{cmd}* and under the assumption of a flat terrain at the reference elevation *hₜₑᵣᵣₐᵢₙ* 201, and since there is no knowledge about the own position or only insufficient accuracy in terms of the own position, the actual terrain elevation of the scanned terrain 202 at the respective ground point a, b, c, d, e is unknown. The actual terrain height can be taken into account if the own position is known with sufficient accuracy. The actual terrain height can be ascertained by virtue of ascertaining the terrain elevation of the scanned terrain by means of a terrain database.

Image capturing metadata XX, that is to say the settings data, applied to the SAR sensor 101a when capturing the image 108a, are also provided in state S402 together with the SAR image 106a, 106b. These settings data inter alia comprise the commanded squint angle, the range measurement, the validity date of the data.

In state S403, the evaluation device 104 attempts within the scope of the image evaluation to correlate geo-referenced landscape features 501 contained in the database 102 and/or a geo-referenced landmark 501 with the SAR image 106b. The landscape features 501 contained in the database 102 are provided in state S404 in the form of templates 107 and landmark metadata YY. The landmark metadata YY inter alia comprise the geo-coordinates of the landscape feature, a description regarding the alignment and a resolution of the template or templates.

To be able to carry out the correlation, the "perspective distortions" of the SAR are within the scope of the preprocessing of the templates 107 in state S405 modelled in the templates 107. Consequently, the templates 107 and the SAR images 106b are normalized with respect to one another.

The "perspective distortions" of the SAR image 106b can firstly be imitated within the template 107 by means of a pose hypothesis. In this case, it may substantially be only the relative geometry and the altitude information explicitly or implicitly contained in the template that are taken into account in order to determine the distortion intended to be imitated in the template 107.

As an alternative to the pose hypotheses, it is possible to ascertain the "perspective distortions" if an attempt is made to retrieve a terrain profile 202 of the template 107 in the SAR image 106b, to compare the distortion of individual distances of the ground points a, b, c, d, e in reality and in the SAR image 106b, and to determine the distortion of the SAR image 106b on account of the radar measuring method therefrom and transfer the latter to the template and thus imitate the distortions in the template.

Matching the SAR images 106b to fit the templates 107 would only be possible with a sufficiently accurate own position. Moreover, the adaptation and/or normalization of the SAR image 106b is only possible with great computational outlay, and hence the provided templates 107 are usually normalized to the respective SAR image 106b and hence artificially distorted.

By way of example, the templates 107 are chosen on the basis of a position estimate of the position by means of the navigation apparatus 100 and substantially contain geo-referenced landmarks 501 or geo-referenced landscape features 501 of a certain terrain section 202.

The normalization is possible since the position, and hence the terrain profile 202 around the landscape feature 501, and the terrain profile 202 of the landscape feature 501 and the relative geometry between SAR sensor 101a and landscape feature 501 are known.

The relative geometry is described by the absolute altitude of the aircraft, for example the barometric altitude, recorded by the altitude detection device 101b, the elevation of the landscape feature 501, by the line of sight of the SAR to the landscape feature and by the range r or slant range r to the landscape feature.

For a successful correlation, it is necessary that the terrain feature 501 is contained both in the selected template 107 and in the SAR image 106b, as a result of which it is possible to ascertain the minimum and maximum possible range of the landscape feature 501 on the basis of the settings data of the SAR.

To the extent the landscape feature 501 is present in the SAR image 106b, the assumption is made of a pose hypothesis that the terrain feature is situated in the "center" of the SAR image 106b such that the maximum range error is minimized. In particular, the pose hypothesis that the template 107 with the landscape feature 501 is located within the SAR image 106b is assumed.

The range r to the landscape feature 501 may be a fixed range of the SAR system 101 that is determinable by means of a radar beam 204. Each pixel of an SAR strip 106a can be assigned a range r. Thus, the SAR sensor 101a can be set in such a way that it supplies strips which have the same ranges, or it can be operated flexibly such that the ranges of the individual SAR strips 106a differ from one another.

The line of sight is determined by the course of the navigation apparatus 100, for example by the course of the inertial navigation system 101c or of a navigation filter taking account of the commanded squint angle of the SAR sensor 101a. By way of example, the course may be specified as an actual state by an aircraft 502 that uses the navigation apparatus 100.

By way of example, a navigation filter is a Kalman filter that fuses a plurality of sensor data. In an example, the navigation filter may fuse the data from an IMU and/or an INS, a barometric altimeter or laser altimeter and navigation data extracted from the SAR image.

The normalization and/or the distorting of the template 107 may be superfluous in an example, specifically if the correction has already been implemented on the part of the SAR system 101; however, this assumes precise knowledge of the own position. Should a GPS be present, the own position can be ascertained by means of GPS. However, the navigation apparatus 100 should be operational under conditions without GPS. In this case, the own position can be determined sufficiently accurately by the navigation apparatus 100 itself, together with the sensor fusion of IMU and/or INS and barometric altimeter.

The correlation between the SAR image 106b and the template 107, in particular the distorted or normalized template 107, is implemented in state S406. In this case, common features in the SAR image 106b and the template 107 which can be made congruent, for example the optical structure of a road crossing, are sought optically and using image processing methods. As a result, the template 107 can be pushed to the suitable position in the SAR image 106b, with the template usually covering a smaller landscape portion than the radar image 106b. The correlation may include a homographic transformation in an example.

Following the correlation of the template 107 with the SAR image 106b, the navigation information contained in the template 107 and/or the landmark meta information YY are transmitted to the navigation module 108 or the navigation system 108. In particular, the geo-referenced position of the landscape feature 501, the range r to the landscape feature 501, the commanded squint angle, the reference elevation 201 of the terrain 202 according to the SAR system 101, and the time of the SAR recording are transmitted to the navigation module 108. By way of example, these specifications can be derived from the image capturing metadata XX supplied with the image 106b and from the landmark metainformation YY.

The evaluation device 104 and/or the navigation module 108 corrects the squint angle in state S407 on the basis of the actual elevation of the landscape feature 501 in relation to the reference elevation 201 of the SAR system. Furthermore, the navigation module 108 in state S408 fuses the range and the squint angle in relation to the landscape feature 501 with the other sensor data, substantially those of the IMU and/or of the INS 101c and/or of the barometric altimeter 101b, and/or the navigation module 108 calculates the own position in an intermediate step with the aid of the altitude of the aircraft, before the own position is fused.

In sensor fusion, various sensor data are processed, for example in a Kalman filter, to form a common solution which combines the advantages of the individual sensors. Thus, an IMU and/or INS may have a low noise and a high update rate, but it is not long-term stable and drifts. In contrast thereto, a GNSS, a GPS or else the navigation apparatus 100 and/or the position determination method, for example, may be long-term stable but only supply measurements with a low update rate of approximately 0.05 Hz and may have a large amount of noise between two measurements. However, the drifting IMU and/or INS is substantially supported with the aid of backup sensors in the navigation filter in which the sensor fusion is performed, and hence this is (these are) also supported by the navigation apparatus 100.

The fused solution now is available in the navigation system 108 and is transferred from the latter back to the image capturing device 101, which requires a very accurate speed value, via the connection 114. The transfer can be implemented either explicitly or implicitly. In the explicit case, the navigation solution provided by the navigation system 108 is used directly by the image capturing device 101. In the implicit case, the correction vector for the inertial navigation system, for example INS or IMU, is transferred to the INS acquiring device 101b in order thereby to independently correct the inertial navigation solution.

A navigation solution may contain a set of navigation data and/or navigation information, for example the bearing and/or speed and/or position.

Navigation information is abstract and is any information serving navigation. By way of example, navigation information includes the altitude value of the barometric altimeter 101b or the squint angle in relation to a geo-referenced landmark 501 or the range in relation to a geo-referenced landmark 501. In particular, the navigation information may be raw sensor data.

Navigation filter refers to a filter which fuses a plurality of navigation data from one navigation sensor and/or from a plurality of navigation sensors to form a navigation solution. In particular, the data of an INS (inertial navigation system) 111 are fused with the data of a backup sensor device 112. By way of example, a GPS system can serve as a backup sensor device 112. In another example, the image capturing device 101, in particular the SAR sensor 101a or the SAR raw data acquiring device 101a and/or navigation data extracted from the SAR strip 106a, can also provide navigation data, in particular the image capturing metadata XX and the landmark metadata YY, for example the geo-referenced position of the landmark 501.

Figure 5 shows the correlation between an SAR image 106b and a template 107 according to the present invention.

To this end, the SAR image 106b is searched for known landscape features, for example from a template 107 and/or from a database 102 with geo-referenced landscape features 501. To limit the search, the search of the matching templates 107 can be restricted to templates that are substantially situated in the surround expected from the surround scanned by the image capture. The expected scanned surround can be derived by means of the settings data XX or the image capturing metadata XX of the image capturing device 101, in particular the squint angle *θ* and the mapped extent range, and the own position of the aircraft 502 being able to be used for deriving the scanned surround.

In the preprocessing step, which is substantially carried out by the image navigation device 104c, the distortion of the SAR image is modeled with the aid of a terrain profile 202 in the template 107 taken from the template 107 in order to simplify the correlation process of SAR image 106b and template 107 and in order to arrive at the processed image 106c in which the SAR image 106b and the template 107 are substantially overlaid on one another in such a way that they correspond at at least one common landmark 501. In this case, various optional optimizations are possible, for example the selection of the template 107 and/or the selection of a process of the image processing, for example an edge searching method.

Figure 5 shows the processed image 106c, in which the SAR image 106b has been correlated with a suitable template 107. The template 107 with landscape feature 501 and/or the database entry was aligned with respect to the geo-referenced landmark 501. By way of example, a road crossing, a lake and/or a church tower may serve as a landmark 501. The elevation above sea level, in particular, as a landmark metadatum YY may also be providable for such a landmark.

Hence, the SAR image 106b can be used for navigation purposes by virtue of the own position, for example a position of the aircraft, being ascertained following the overlay and making congruent process. To this end, it is possible to derive data from the SAR image 106b and the required position data from the provided image capturing metadata XX, for example range, squint angle and time and/or time interval. The provision of the image capturing metadata XX can be implemented in an example by virtue of the latter being read from the SAR image 106b and/or being provided as image capturing metadata XX.

The result of the correlation is a pixel coordinate of the SAR image 106b, which corresponds to and/or is linked with the pixel coordinate of the geo-referenced landmark 501. Thus, proceeding from the landmark 501 in the template 107, a jump is made into the SAR image 106 at the position of the landmark 501 and the corresponding image capturing metadata XX of the pixel coordinate of the SAR image 106 are read.

Since the geo-coordinate of the landmark 501 is known from the template 107, a relationship can be established between the pixel coordinate of the landmark 501 in the SAR image 106b and the geo-coordinate of the geo-referenced landmark 501 in the template 107 by correlating and/or matching the template 107 to the SAR image 106b.

As a result of this knowledge, the image capturing metadata XX or the settings data XX of the SAR sensor 101a, for example the squint angle *θ* and its measured variables stored in the SAR image 106b, for example the slant range r to the geo-referenced landmark 501 obtained by the radar range measurement, can be related to the geo-referenced landmark 501 in order thus to obtain navigation information in relation to the own position The image capturing metadata XX describes the relative geometry of the SAR antenna 101a in relation to the recorded terrain profile 202.

Further image capturing metadata XX, for example a speed or altitude value, can be provided from the SAR-own measuring devices, such as the INS acquiring device 101c and the altitude detecting device 101b.

All data derived either in the SAR image 106b, from the image capturing metadata XX and/or from the landmark metadata YY can be fused to form a data pool, from which the navigation information then can be derived. In particular, the own position may be derivable from this data pool.

Additional data may be derived from the dedicated onboard navigation system 108 or the inertial navigation system 108.

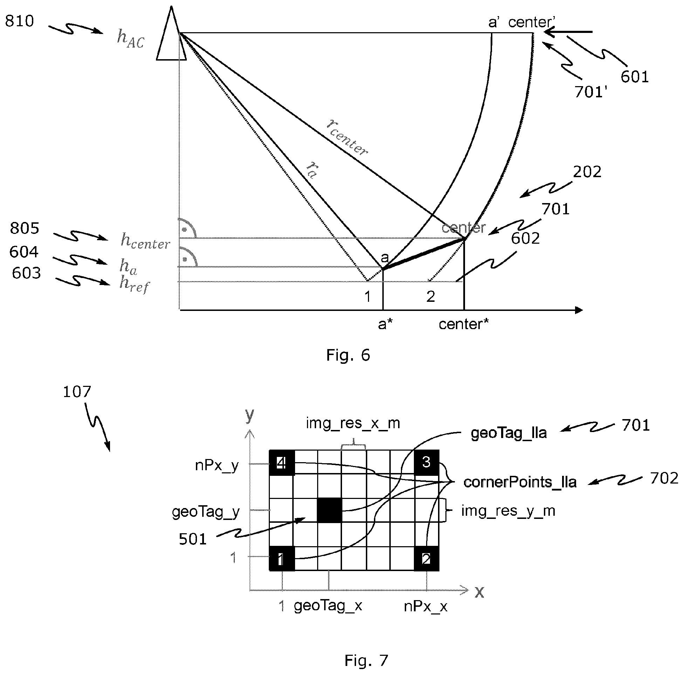

Figure 6 shows a model for determining distortions in an SAR image 106b according to the present invention.

The aircraft 502, for example an airplane 502, and/or the radar sensor 101a move at the flight altitude h_AC (AC, aircraft), 810.

An SAR image 106b has distortions on account of the perspective and/or the terrain profile 202. Expressed differently, this means that distortions occur on account of the relative geometry of the radar sensor 101a in relation to the terrain profile 202.

The distortions in the SAR image 106b can only be corrected with difficulties since the accurate own position and hence the elevation of the scanned terrain 202 are generally unknown.

By contrast, the distortions of the SAR image 106b can be determined and reproduced in the template 107 since the position of the template 107 and the terrain of the template 107 and, approximately, the relative geometry between SAR sensor 101a or SAR raw data acquiring device 101a and template 107 are known.

The in-range shift in relation to the center pixel 701' of the SAR image 106 is calculated below. In the process, the assumptions and/or pose hypotheses that the geo-referenced point 701 of the landmark 501 of the template 107 is located centrally in relation to the in-range axis of the SAR image 106, the squint angle *θ* remains constant for the recording time period of the relevant portion of the SAR image 106 with the contained landscape feature 501, and the aircraft 502 carries out a substantially straight movement without altitude changes are made.

The pose hypothesis that the landscape feature 501 can be found in the center of the SAR image with respect to the in-range axis is optimal within the meaning of the maximum range error should only a single pose hypothesis be tested since, for a successful correlation in the worst-case scenario, the landscape feature 501 can be situated at the lower or upper image edge, that is to say the landscape feature can be situated at the minimum or maximum range and the maximum error consequently is half the difference between the maximum range and minimum range. The range r has a significant influence on the relative geometry, and hence on the distortion. Therefore, the similarity of the distortion between the normalized template under the assumption that the landscape feature 501 is situated in the center of the SAR image 106 and the SAR image is likewise optimal.

Should a plurality of hypotheses be tested, the hypotheses can be chosen so that the maximum error in respect of the range is minimized, but also that the maximum error in respect of the other relevant settings parameters is minimized at the same time.

The absolute value |*̅a̅'̅c̅e̅n̅t̅e̅r̅'̅*̅| describes the distance in the SAR image plane 601 at flight altitude h_AC, 810 of the ground points "a" and "center" imaged in the SAR image plane. The ground points "a" and "center" are located on the terrain profile 202, with the ground point "a" having an elevation h_a. The ground point "center" corresponds to the center pixel 701' of the SAR image 106b, that is to say is linked to the center pixel 701', and is located at the landmark elevation h_center, 805. The link between the ground point "center" and the center pixel 701' of the SAR image 106b is established in the case of a successful correlation of the template.

No connection between individual ground points a, b, c, d, e, center and pixel points a', b', c', d', c', center' of the SAR image 106b is established when determining the distortion by way of a pose hypothesis and an inclusion of the relative geometry, instead all that is assumed is a distortion on account of the relative geometry.

In an alternative to test the pose hypothesis, an attempt is made to assign to each ground point a, b, c, d, e, center of the terrain profile 202, which can be gathered from the database 102 as ground points a*, b*, c*, d*, c*, center* in the form of the template 107, a corresponding pixel point a', b', c', d', c', center' of the SAR image 106b in order to be able to determine the distortion between SAR image 106b and template.

In the case of the correlation that follows the distortion imitation or normalization by way of the terrain profile 202, it should be observed that the center pixel 701' is situated in the SAR image 106b and, for example, can be connected to a corresponding geo-referenced pixel 701 of the landmark 501 in the template 107. The center pixel 701' is assumed by the pose hypothesis that the landmark 501 known with its geo-coordinates and/or landmark metadata YY from the template 107 is located in the center of the SAR image 106b with respect to the in-range axis of the SAR image and will be found there.

Furthermore, for the normalization, the assumption is made that the absolute value |*̅a̅*̅c̅e̅n̅t̅e̅r̅*̅*̅| is the horizontal range between the ground points center and a projected onto the reference plane 602. The reference plane 602 is located at the assumed reference elevation h_ref, 603.

The shift *s*ᵢₙ in-range of a distance of a ground point a in relation to the center pixel 701' when imaging a horizontal range in the reference plane onto the SAR image plane 601 is calculated as: $\begin{matrix}{s}_{in} = \left|\vec{a * center *}\right| - \left|\vec{a ′ center ′}\right| \\ {s}_{in} = \left(\sqrt{{r}_{center}^{2} - {\left({h}_{AC}-{h}_{center}\right)}^{2}}-\sqrt{{r}_{a}^{2} - {\left({h}_{AC}-{h}_{a}\right)}^{2}}\right) - \left({r}_{center}-{r}_{a}\right)\end{matrix}$

Consequently, image representations in the radar image 106 are described by these equations or, expressed differently, this is how the distortion existing between the template 107 and the radar image 106 on account of the relative geometry and the terrain profile is ascertained.

The template 107 is an entry in a reference database 102 and substantially represents an image with a landscape feature 501, for example an extracted road crossing.

### Figure 7 shows an arrangement of different pixels in a template 107 according to the present invention.

A representation of individual geo-referenced pixels of a template entry 107, for example of a map portion, is considered in figure 7. It should be observed that the pixel coordinates of the template 107 are independent of the pixel coordinates of the radar image 106. However, a link can be established between the pixel coordinates of the template 107 and the pixel coordinates of the radar image 106. Thus, for example the center pixel 701' may also relate to the SAR image 106b and be chosen in such a way that it is located in the center of the SAR image 106, while a geo-referenced pixel 701 relates to a geo-referenced landmark 501 in the template 701 and initially has no particular position and consequently need not necessarily be located in the center of the template 107.

However, a relationship and/or a link is established between the center pixel 701' and the geo-referenced pixel of the geo-referenced landmark 501 as a result of the correlation.

A noteworthy piece of meta-information YY of the template 107 is the geo-referenced pixel geoTag_lla 701 (latitude longitude altitude) and/or the geo-referenced point geoTag_lla 701 of the template 107. A template 107 may also comprise a plurality of geo-referenced points geoTag_lla 701. This referenced point geoTag_IIa 701 specifies the pixel coordinates geoTag_x and geoTag_y of the landmark 501 in the template 107. It is situated in an xy-coordinate system of the template 107 and can be chosen as desired Unlike the center pixel 701', for example, it is not distinguished by virtue of the fact that it is chosen to be in the center.

Expressed differently, the pose hypothesis is chosen freely and hence the center pixel 701' need not be chosen to be in the image center. This may mean that a certain slant distance r to the landmark 501 is assumed for the purposes of calculating the relative geometry, in order to be able to estimate the distortion. This estimate may be carried out without considering the SAR image 106b. This slant distance r, in particular the pose of the landmark 501 in the SAR image, can be chosen between the extremal positions of the in-range extent at the lower image edge of the SAR image and at the upper image edge, at which the landmark could be found.

However, as a hypothesis, the assumption is made for the choice of the slant distance r that the landmark 501 is located in the center of the template 107 and hence a slant distance r which is located in the center between the two extremal values of the slant distance at the portion boundaries of the SAR image is chosen as a hypothesis.

On the basis of this assumption, it is possible to estimate the distortion intended to be imitated in the template substantially without having to resort to the SAR image 106b. How good the estimate and/or the assumption about the pose hypothesis was is then found during the correlation of the SAR image 106b and the template 107, in particular the landmark 501 of the template 107.

The assumption that the landmark 501, in particular the representation of the landmark 501 in the SAR image 106b, can be found in the center of the SAR image 106 in respect of the in-range axis is optimal when using only a pose hypothesis within the meaning of the maximum deviation of the similarity of the distortion between template and SAR image 106b and substantially serves to reduce the computational outlay. As an alternative to the assumption that the landmark 501 from the template 107, which should be found in the SAR image 106b, is located in the center of the SAR image 106, it is possible to make the assumption that the selected template 107 is located in the center of the SAR image 106b.

The abbreviation IIa represents the term "latitude longitude altitude", that is to say the geo-referenced position of the corresponding pixel in the "real" world which may be represented by the template 107.

The abbreviations res_x_m and res_y_m describe the resolution of the template in the x-direction and y-direction, respectively, that is to say for example a scale and consequently the number of meters a pixel corresponds to in reality. By way of example, the resolution can be chosen as a resolution of 2 m. This information is implicitly contained in the geo-referenced position of the corners of the template 107. However, there are many equivalent options for representing the necessary information.

The metadata YY of the template 107 additionally required for preprocessing purposes are specified in figure 7 as geo-coordinate of the corner points 702 denoted by cornerPoints_lla.

Figure 7 shows the extent nPx_x, nPx_y or resolution nPx_x, nPx_y of the template 107 which arises in relation to the resolution res_x_m and res_y_m. Furthermore, the template contains the terrain elevation for all pixels or, alternatively, the terrain elevations of all pixels can be derived by means of a terrain database. Only a few pixels may also have a terrain elevation in an example and the terrain elevation of the other pixels can be determined with the aid of an interpolation of an elevation of the surrounding pixels. Alternatively, the elevation of the geo-referenced point 701 can be assumed for all points. These are various examples of how the landmark metadata YY can be determined.

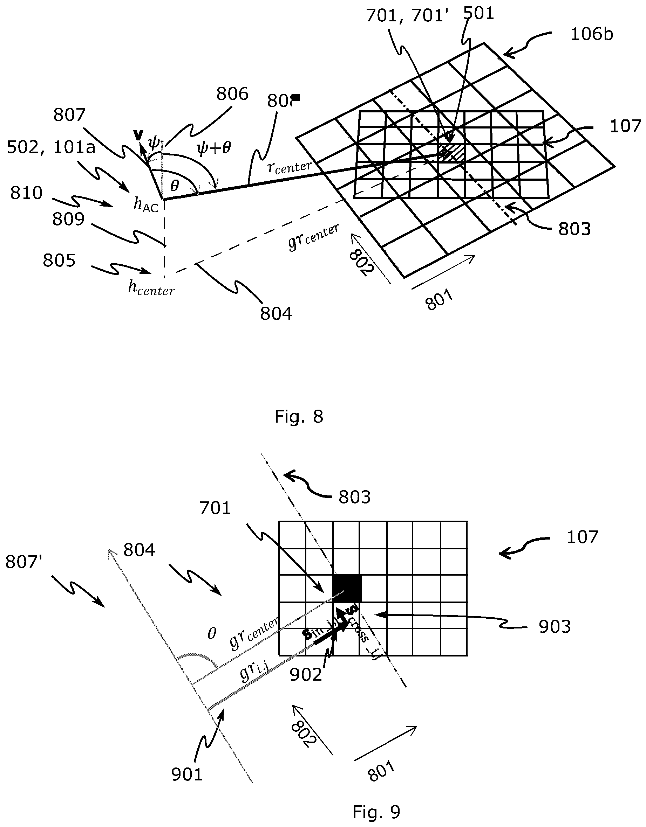

Figure 8 shows the relative position of the template 107 in relation to the SAR image 106b in the case of a correlation according to the present invention.

In this case, the geometry is shown between SAR sensor 101a, SAR image 106b and template 107. Together with the aircraft 502, the sensor 101a is at the flight altitude h_AC 810, the ground point imaged in the center pixel 701' is situated at the assumed elevation h_center 805, such that the latter corresponds to the landmark elevation 805. Further, the sensor 101a is situated at a slant range of r_center 808 and a ground range of gr_center 804 in relation to the ground point of the landmark 501 imaged in the center pixel 701'. The absolute squint angle Ψ+θ is spanned between the north direction 806 and the slant range r_center 808. In this case, the course angle Ψ denotes the course in relation to the north direction 806 and may be assumed as a negative angle in figure 8 since the aircraft 592 moves in the northwesterly direction.

By way of example, the SAR sensor 101a moves in the aircraft 502 in the direction 807 denoted by v or along the course denoted by the direction 807. In relation to the north direction 806, the SAR sensor 101a moves with the course angle Ψ. The course angle Ψ is specified in relation to north 806. The squint angle θ is specified in relation to the speed vector v. Therefore, the sum Ψ+θ of course angle Ψ and squint angle θ represents the squint angle in relation to north 806. The direction 807 and the north direction 806 run substantially perpendicular to the absolute altitude difference 809 h_AC - h_center.

The SAR sensor 101a records the SAR image 106b, 106a, which has an extent in the movement direction 802, that is to say in the cross-range direction 802, and an extent in a direction 801 substantially at right angles to the movement direction 802, that is to say in the in-range direction 801.

That slant range 808 r_center from the SAR sensor 101a to the center line 803, which is measured by means of the radar beam 204, is constant in relation to the respective recording times of the SAR strips 106a, with the strip map mode having been selected and the assumption of a flight in a straight line at a constant altitude and fixed SAR range to the center line 603 applying. Likewise, the range 804 *gr_center* of the reference plane to the center line 803 is constant.

Normally, the SAR system 101 records all SAR strips 106a using a fixed relative geometry. In one example, the minimum range, that is to say the lowermost pixel of the SAR strip 106a and/or the lowermost pixel of the SAR image 106b, may be 3 km and the maximum range, that is to say the uppermost pixel of the SAR strip and/or the uppermost pixel of the SAR image 106b, may be 5 km. This yields an in-range 801 extent of 2 km for the SAR strip 106a and/or the SAR image 106b.

Consequently, the central pixel 701' or the center pixel 701' of the SAR strip 106a and/or of the SAR image 106b is at a range of 4 km from the aircraft 502 at the landmark elevation h_center, 805 and a center line 803, which is likewise a range of 4 km, arises accordingly.

A similar procedure can be carried out for an SAR image 106b that was recorded by means of the spotlight mode.

The reference plane 602 (not shown in figure 8) can be defined arbitrarily. The reference elevation h_ref, 603 (not shown in figure 8) is chosen such that it reflects the actual terrain elevation. However, the reference elevation h_ref, 603 can be only an approximation of the actual elevation since the own position is not known accurately, which is why the scanned terrain is not known accurately either, and the assumption of a flat terrain, which is made for the reference elevation h_ref, 603, does not apply to the actual terrain profile 202. The range 804 *gr_center* at the landmark elevation *h_center,* 805, which represents the reference plane for the center line 803 is calculated according to ${gr}_{center} = \sqrt{{r}^{2} - {\left({h}_{AC}-{h}_{center}\right)}^{2}} .$

To simplify the correlation, the assumption is made that the center line 803 contains the geo-referenced point 701 of the template 107, and hence the geo-referenced landmark 501.

Figure 9 shows a plan view of the template 107 in relation to the movement direction 807 according to the present invention.

With the assumption of a flight in a straight line along the movement direction 807 at a constant altitude *h_AC* (not shown in figure 9), which is projected onto the flight track 807' in the horizontal plane at elevation h_center, 805, it is possible to calculate the in-range shift 801 of the template 107 in relation to the SAR image 106b by virtue of using the horizontal range *gr_{center}* 804 between the center pixel 701' of the SAR image 106a (not shown in figure 8) and the SAR sensor 101a as a reference range for the in-range shift of each pixel of the template 107. The horizontal range *gr_{center},* 804 is the projection of the slant range r_center, 808 onto the reference plane of the landmark elevation *h_center, 805.*

To this end, the horizontal range *gr_{i,j}* 901 of each pixel of the template 107, which surrounds the geo-referenced pixel 701 of the landmark 501 and which is contained in the template 107, is calculated. The horizontal range *gr_{i,j}* 901 runs parallel to *gr_{center}* 804 and ends at the flight track 807' projected into the horizontal plane.

The slant range *r_{i,j}* of each pixel of the template 107 is calculated according to the formula ${r}_{i , j} = \sqrt{{gr}_{i , j}^{2} + {\left({h}_{AC}-{h}_{i , j}\right)}^{2}}$

The in-range shift 902 *s*_{in_i , j} *=* (*gr_{i,j} - gr_{center}*) - (r_{i,j} *- r_{center}*) is calculated for each pixel of the template 107.

In a manner analogous to the in-range shift, it is possible to calculate and apply the cross-range shift. The cross-range shift 903 *s_{cross}* in relation to the geo-referenced pixel 701 of the landmark 501 is calculated as follows: ${s}_{cross _ i , j} = sin \left({cos}^{- 1}\left(cos\left({θ}_{cmd}\right)\frac{\sqrt{{{r}_{i , j}}^{2} - {\left({h}_{AC}-{h}_{center}\right)}^{2}}}{\sqrt{{{r}_{i , j}}^{2} - {\left({h}_{AC}-{h}_{i , j}\right)}^{2}}}\right)-{θ}_{cmd}\right) {r}_{i , j}$

For the purposes of normalizing and taking account of the distortion, the template 107 is initially rotated through the squint angle correction for the center pixel 701', that is to say the geo-referenced point 701 of the landmark 501.

The shifts *s*_{in_i , j} and s_{cross_i, j} are carried out by virtue of the template 107 being resampled taking into account the shifts, for example by virtue of the value of the pixel being assigned to the closest pixel or being assigned in proportions to the adjacent pixels. In this case, this is an inverse operation to the bilinear interpolation.

Consequently, the distortion from the SAR image 106b to be applied to the template 107 is achieved by the shift s_{in_i , j} and s_{cross_i , j} for each pixel. Since the resolution of an image is discrete, that is to say comprises only an integer number of pixels, but the shift might not be integer, the shifted pixel falls between the original pixel raster. The template 107 is resampled within this meaning. As a result of the shift, color values and/or intensity values are reassigned to the existing pixel raster and/or resampled accordingly, for example by assignment to the closest pixel or by an inverse operation to the bilinear operation.

If the assumptions made, that is to say a flight in a straight line, a constant flight altitude and/or geo-referenced point 701 of the template 107 is located in the center of the SAR image 106b in relation to the in-range coordinate, are not applicable, the method can nevertheless be applied approximately in order to imitate the distortion of the SAR image in the template 107, which distortion is caused on account of the terrain profile 202 and on account of the relative geometry.

In particular, instead of the assumption that the geo-referenced point 701 of the template 107, that is to say the geo-referenced point 701 of the landmark 501 in the template 107, is located in the center of the SAR image 106b, it is possible to use the estimated position of the aircraft and/or of the SAR sensor 101a in order to obtain the relative geometry between SAR sensor 101a and template 107 with an improved accuracy, in order thus to better imitate and/or model the distortion of the SAR image 106b in the template 107. Additionally, any other point of the template 107 can be chosen instead of the geo-referenced point 701 of the landmark 501 as a reference for calculating the shift or the distortion.

Furthermore, following a successful correlation and/or a successful matching of the template 107 and SAR image 106b, 106c, the distortion of the template 107 can now be implemented again with the now available and very accurate relative geometry. This may lead to a good correlation process and ultimately lead to very accurate navigation information.

In accordance with the basic concept that the position and the terrain profile 202 of the template 107 are substantially known, it is possible to model the distortions in the SAR image 106b in the template 107 even without the assumptions made above, even if this is accompanied by increased computing power and increased complexity, by virtue of varying the influencing variables, that is to say testing a plurality of hypotheses.

In other words, this may mean that should the distortion of the SAR image 106b not be modeled in the template 107, this may make the correlation process and/or the matching the more difficult, so that the result is substantially inaccurate or the correlation process even fails. The application of the distortion to the template 107 may use prior knowledge, for example the terrain profile 202 of the template 107 and/or corresponding landmark metadata YY, but also assumptions, for example the position at which the template 107 is found in the SAR image 106b. What can be achieved if these assumptions are made before the correlation process is carried out is that the distortion of the SAR image is modeled well in the template 107.

The relative geometry may be known with good accuracy since the terrain profile 202 of the template 107 is substantially known, for example by way of the landmark metadata YY, which are also stored for the corresponding terrain points, and no assumptions need to be made in this respect. In addition to the perspective, the terrain profile 202 has a great influence on the distortion in the SAR image 106a, 106b. The distortion derived with a great reliability from the relative geometry and/or the terrain profile 202 may therefore be a good approximation to the actual but unknown distortion of the SAR image 106b.

Expressed differently, this may mean that the fact that the SAR image 106b has a distortion as a result of the slanted line of sight of the SAR raw data acquiring device 101a is known, but the distortion itself is not. The theoretical extremal values would be looking exactly perpendicular and/or in the nadir direction at terrain points a, b, c, d, e, or looking at these exactly laterally, that is to say at a 90° angle. In fact, the extent of range, that is to say the range between the imaged ground points with a minimum and maximum slant range, of an SAR strip 106a or of the SAR image 106b is known from the settings data XX. Every line of sight and consequently every distortion is possible therebetween.

So as not to try out all possible distortions, an assumption applicable on average and/or pose hypothesis is made by virtue of assuming that the landmark 507 is located in the center of the SAR image 106b in respect of the in-range axis 801, that is to say on the center line 803. In comparison, this assumed approximate mean distortion applied to the template 107 better reflects the actual distortion of the SAR image 106 than the use of an unprocessed or non-preprocessed and unnormalized template 107, as is taken from the template database 102. Hence, the correlation process may be simplified and the accuracy may be increased if preprocessing and/or the distortion from the SAR image 106b is applied to the template 107.

After a landscape feature 501 of the database 102 was found or correlated in the SAR image 106b, it is possible to link and/or fuse the landmark metadata YY and the image capturing metadata XX including the measured variables of the SAR image 106b, in particular that slant range r, said metadata serving the determination of the own position. In particular, the range and the squint angle of the SAR antenna 101a' are known in relation to the geo-referenced landscape feature 501 and the associated validity datum.

Following the correlation of the template 107 or the landscape feature 501 with the SAR image 106b, the pixel coordinates of the SAR image 106b which correspond to the at least one geo-referenced point or the at least one geo-referenced pixel 701 of the landscape feature 501 are known. From this information it is possible to ascertain the SAR strip 106a which contains the geo-referenced landmark 501. Hence, the commanded squint angle θ is known from the image capturing metadata XX of the SAR strip 106a linked therewith, that is to say a target squint angle which describes the line of sight with which the geo-referenced landmark 501 can be seen without an undertaken correction of said squint angle.

Following the correlation, the actual pixel coordinate of the landmark 501 and hence also the actual geo-coordinate of the end point of the actual slant range r is known, thus replacing the previously assumed slant range r_center with an actual value. However, in general, the actual pixel coordinate deviates from the assumption and/or pose hypothesis of being located in the center of the SAR image 106b. The center pixel 701', like the slant range r_center, was only an assumption for normalizing the template and now plays no further role since the true geo-coordinates and the true slant range r of the landmark 501 in the SAR image 106b are known.

Furthermore, the validity datum, the recording time and/or the recording time interval of the SAR strip 106a, is known. This validity datum describes when the physical measurement of the SAR strip 106a took place and is denoted by @t in figure 5. To label the time, each SAR strip 106a was provided with a timestamp upon acquisition.

Further, the metadata XX of the SAR strip 106a contain the measured slant range for each pixel of the SAR strip 106a, and hence the slant range r of the geo-referenced landscape feature 501 from the SAR antenna 101a' is also known.

Therefore, the navigation apparatus 100 has a set of navigation information available, for example the slant range r and the squint angle *θ* of the SAR antenna 101a' in relation to the geo-referenced landscape feature 501 with the validity datum @t.

Since the creation of the SAR images 106b repeats periodically, the image data derived from the SAR image 106b is substantially a snapshot, that is to say the state at the recording time of an individual SAR strip 106a. Each SAR strip 106a is assigned to a validity datum, the validity datum describing when the physical measurement was carried out.

For the stripmap mode, the SAR image 106b comprises a plurality of SAR strips 106a, which each have different validity datums, and the state variables, for example the position, the course, etc., of the aircraft 502 were accordingly different at different times.

Figure 5 plots the movement direction 807 of an aircraft 502 which uses the navigation apparatus 100 for navigation purposes.

Before the squint angle θ is fused in the navigation filter, the former is still corrected for an increased navigation accuracy.

As already shown, an altitude error *Δh* may cause an error in the squint angle *Δθ*. The squint angle error *Δθ* describes the difference between the actual squint angle *θ*, at which the landscape feature 501 was in fact recorded, and the expected squint angle *θ_{cmd}* or the target squint angle, at which the landscape feature was recorded according to the SAR system 101. However, the actual squint angle *θ* is not known to the SAR system 101 or the image capturing device 101. $Δθ = {cos}^{- 1} \left(cos\left({θ}_{cmd}\right)\frac{\sqrt{{r}^{2} - {h}_{AC}^{2}}}{\sqrt{{r}^{2} - {\left({h}_{AC}+Δh\right)}^{2}}}\right) - {θ}_{cmd}$

The altitude error *Δh* is composed of the altitude error of the own position and the difference between the terrain elevation assumed by the SAR system 101 and the actual terrain elevation of the geo-referenced point. For simplification purposes, a flat terrain is the starting point for the assumed terrain elevation. The altitude error of the own position is not known.

The error on account of the difference in the terrain height can be approached in at least two different ways.

In an example, the altitude error *Δh* may be determined on account of the assumption about the terrain elevation since the elevation of the landscape feature 501 and the assumption about the terrain elevation are known. Accordingly, the squint angle error *Δθ* can be calculated and corrected according to the equation already specified above.

In another example the SAR system 101 makes the assumption that the terrain elevation corresponds to the elevation h_center, 805 of the geo-referenced landscape feature 501. The prediction and/or hypothesis as to which landscape feature 501 should be expected in the SAR image 106b can also be made with only an approximate own position. As a result, the component of the altitude error *Δh* on account of the difference between assumed h_center, 805 and actual elevation of the landscape feature is eliminated. If a plurality of landscape features 501 are present in an SAR image 106b, this principle may not be usable or only be usable to a limited extent, for example if it is possible to choose an average elevation of the landscape features for the purposes of reducing the error.

The SAR sensor 101a should select a reference elevation h_ref, 603, in order to calculate the expected Doppler shift. In general, the SAR sensor 101a uses any desired reference elevation h_ref, 603. If the reference elevation h_ref, 603 is skillfully chosen, that is to say if the reference elevation corresponds to the elevation h_center of the geo-referenced landscape feature 501 of the template 107, it is possible to save the subsequent squint angle correction on account of the non-existent altitude error between reference elevation and elevation of the template.

Once again, to define a reference elevation h_ref, 603, a reference elevation h_ref, 603 is chosen arbitrarily. However, this is typically chosen in such a way that it corresponds to the actually scanned terrain to the best possible extent.

Should the reference elevation h_ref, 603 correspond to the elevation of the geo-referenced landscape feature 501 of the template 107, the altitude error between the geo-referenced feature and the reference elevation is zero and accordingly the squint angle error in relation to the geo-referenced feature is likewise zero. That is to say there is no further need for a correction of the squint angle.

In the case where a plurality of templates 107 or a plurality of geo-referenced landscape features 501 are situated in an SAR image 106b, it is no longer possible to skillfully select the reference elevation h_ref, 603 because the reference elevation corresponds either to the elevation of the one or the other landscape feature 501 of the template 107 but not to both or more landscape features 501 of the template 107 or to a plurality of geo-referenced landscape features 501.

With this knowledge about possible errors it may be possible to develop an error model of the navigation process.

In this case, the influence on the state variables should be considered. For example, the position has substantially no influence on the SAR image 106b. All that is required is an approximate position in order to select the possible templates 107.

The SAR system 101 requires a very precise speed value in order to calculate the expected Doppler shift, with the Doppler shift otherwise contributing to the squint angle error *Δθ*. However, the component of the squint angle error *Δθ* on account of the relative altitude error between SAR antenna and the surround imaged in the SAR image can be corrected on account of the very accurate elevation value of the geo-referenced landmark.

The bearing angles have substantially no direct influence on the SAR image 106b. However, the bearing influences the antenna gain in the direction of the terrain to be scanned, and hence the sensitivity of the SAR sensor 101a; this in turn have an influence on the image quality.

There are various influencing factors which influence the accuracy of the SAR navigation information and, in particular, the accuracy of the image capturing metadata XX.

Thus, in the case of a range of measurement, the range accuracy *σᵣ* is influenced by the measurement accuracy of the SAR sensor 101a in respect of the range, in particular the accuracy of the time-of-flight measurement, *σ_{SAR,Entfernung},* the accuracy of the correlation process *σ_{Korretationsprozess},* in particular the accuracy of the correlation process in the horizontal plane, and the accuracy of the geo-referenced point 501, for example as a result of a database error *σ_{Datenbank}.*

Since the individual error components are independent and using the assumption that the errors have a normal distribution, the resultant range accuracy *σᵣ* can be calculated as follows: $\begin{matrix}{σ}_{r} = \sqrt{{σ}_{SAR , range}^{2} + {\left({cosϕσ}_{Correlation process}\right)}^{2} + {\left({cosϕσ}_{database , horizontal}\right)}^{2} +} \\ \overline{+ {\left({sinϕσ}_{Database , altitude}\right)}^{2}}\end{matrix}$

Angle measurements have a significant influence on the result when using an SAR system 101.

The angle accuracy *σ_{θ}* of the squint angle *θ* may be influenced by the accuracy of the SAR sensor 101a in respect of the angular resolution, for example on account of the Doppler shift *σ_{SAR, angle}.* However, the angle accuracy *σ_{θ}* of the squint angle *θ* may also be influenced by the accuracy of the correlation process *σ_{Correlation process},* in particular the accuracy of the correlation process in the horizontal plane, and by the accuracy of the geo-referenced point 501, for example as a result of a database error *σ_{database}.* Likewise, the angle accuracy *σ_{θ}* of the squint angle may be influenced by the altitude error *σₕ* remaining after the angle correction, said altitude angle containing the altitude accuracy of the own position and the elevation accuracy of the geo-referenced point, and by the accuracy of the absolute speed *σ_{Δv}* and also by the direction error of the speed vector *σ_{β}.*

Since the individual error components are independent and using the assumption that the errors have a normal distribution, the resultant angle accuracy *σ_{θ}* can be calculated substantially as follows as the square root of the sum of the squares of the error: $\begin{matrix}{σ}_{θ} = \sqrt{{σ}_{SAR , angle}^{2} + \frac{{{σ}_{Correlation process}}^{2} + {{σ}_{database , horizontal}}^{2}}{{\left(cosϕr\right)}^{2}} +} \\ + \overline{{\left({cos}^{- 1}\left(cos\left({θ}_{cmd}\right)\frac{\sqrt{{r}^{2} - {h}^{2}}}{\sqrt{{r}^{2} - {\left(h+{σ}_{h}\right)}^{2}}}\right)-{θ}_{cmd}\right)}^{2} +} \\ \frac{70 ′}{+ {\left({cos}^{- 1}\left({θ}_{cmd}\frac{v}{v + {σ}_{Δv}}\right)-{θ}_{cmd}\right)}^{2} + {σ}_{β}^{2}}\end{matrix}$

The navigation filter can carry out tightly-coupled fusion directly on the ascertained navigation information, for example the range and the squint angle in relation to the geo-referenced point 501. To this end, the accuracies of a navigation information are also required.

Expressed differently, tightly coupled may mean that the sensor measurements are closer to the measurement principle of the sensor but are no longer present in the same state domain in which the navigation filter operates. Using the example of GPS, this corresponds to the processing of the range measurements to the individual GPS positions. In this case, there is range domain versus position domain.

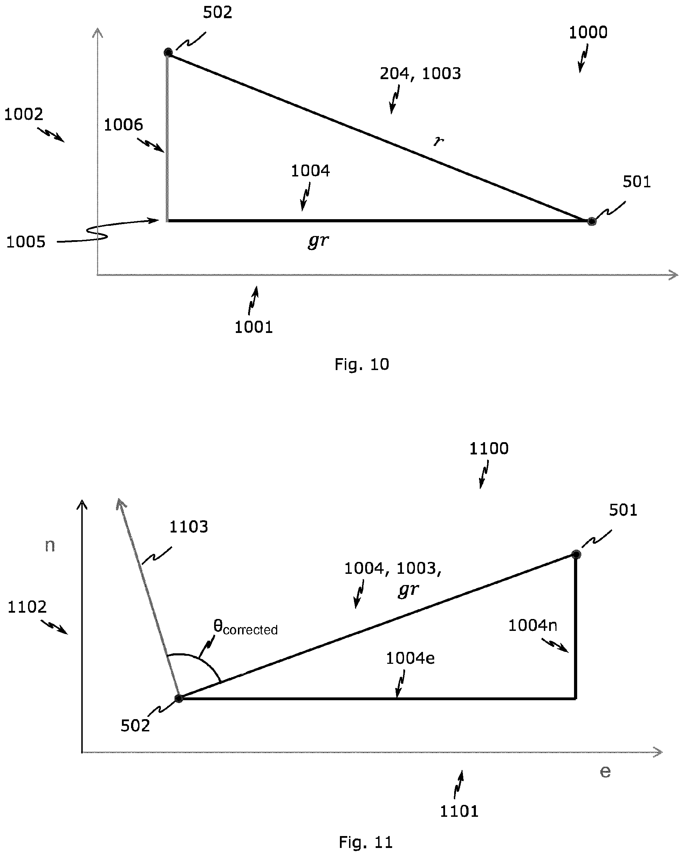

Figure 10 shows a radar beam 204, 1001 in an altitude-ground range diagram 1000 according to the present invention.

In this alternative example, the ascertained range and the ascertained squint angle are transformed into Cartesian position information before they are processed in loosely coupled fashion in the navigation filter, as a result of which there is an increased robustness of the navigation filter.

In this case, loosely coupled may mean that the sensor measurements are present in the same state domain in which the navigation filter operates. Using the example of GPS, a loosely coupled fusion is based on fusion of the GPS position. The ground range is plotted on the abscissa 1001 and the altitude is plotted on the ordinate 1002. Proceeding from the aircraft 502, which is traveling substantially into the plane of the drawing, the radar beam 204, 1003 is emitted in the direction of the geo-referenced landmark 501. In this case, the beam travels the SAR range r. This corresponds to a ground component 1004, gr, which can be calculated. The ground component 1004, gr is at a reference elevation 1005, which corresponds to the elevation h_center, 805 of the geo-referenced land feature 501. The aircraft 502 is at an altitude of 809, 1006 above the reference elevation 1005. By way of example, the absolute altitude of the aircraft h_AC, 801 was ascertained by way of a barometric altimeter.

Figure 11 shows the ground component of a radar beam in a north-east diagram 1100 at the flight altitude according to the present invention.

The east direction 1101, e is plotted on the abscissa and the north direction 1102, n is plotted on the ordinate. Only the ground component 1004 gr of the radar beam 1003 is represented.

Proceeding from the aircraft 502, which moves along the axis of the aircraft 1103 in the northwesterly direction, the radar beam 1003 is emitted in the direction of the geo-referenced land feature 501.

The angle between the flight direction 1103 and the radar beam 1003, in particular its grand component 1004, equals the corrected squint angle θ_{corrected}. The ground component 1004 can be divided into a delta-north component 1004n or Δnorth 1004n and a delta-east component 1004e or Δeast 1004e on the basis of the corrected squint angle θ_{corrected}.

For loose coupling, the horizontal range 1004, that is to say the ground range 1004, gr, to the geo-referenced point 501 is calculated with the aid of the altitude 1006 and the horizontal range 1004 is divided into a north component and an east component with the aid of the corrected squint angle θ_{corrected}.

The altitude can be ascertained autonomously in an example, for example by way of a barometric altimeter 101b.

The ground range 1004 emerges as $gr = \sqrt{{r}^{2} - {\left({h}_{AC}-{h}_{center}\right)}^{2}} .$

In this case, h_center, 805 is the elevation of the geo-referenced point on the terrain profile 202 which can be ascertained from the landmark metadata YY of the template 107.

With the corrected squint angle θ_{corrected}, the delta-north component 1004n emerges as $Δnorth = cos \left({θ}_{corrected}\right) gr .$

With the corrected squint angle θ_{corrected}, the delta-east component 1004e emerges as $Δeast = sin \left({θ}_{corrected}\right) gr .$

Since this is two-dimensional position information, the latter is divided into a north component 1102 and an east component 1101. However, it is possible to define any orthogonal axes, for example south and west.

The accuracy of the navigation information required for loosely coupled sensor fusion is described below: ${σ}_{gr} = \sqrt{\frac{{σ}_{r}^{2}}{cos {\left(ϕ\right)}^{2}} + {σ}_{h}^{2} tan {\left(ϕ\right)}^{2}}$ ${σ}_{north} = \sqrt{{\left(cos\left({θ}_{corrected}\right){σ}_{gr}\right)}^{2} + {\left(sin\left({θ}_{corrected}\right){grσ}_{θ}\right)}^{2}}$ ${σ}_{east} = \sqrt{{\left(sin\left({θ}_{corrected}\right){σ}_{gr}\right)}^{2} + {\left(cos\left({θ}_{corrected}\right){grσ}_{θ}\right)}^{2}}$ where *σᵣ* denotes the range accuracy and *σ_{θ}* denotes the angle accuracy. Since the range accuracy *σᵣ* already contains the elevation error in the database, *σₕ* describes only the altitude error of the own position.

It is additionally pointed out that "comprising" or "having" does not rule out other elements or steps, and "a" or "an" do not rule out a multiplicity. It is also pointed out that features or steps that have been described with reference to one of the above exemplary embodiments may also be used in combination with other features or steps of other exemplary embodiments described above. Reference signs in the claims are not to be regarded as limiting. The scope of the invention is defined by the appended claims.

### List of reference signs

- 1, 2, 3, 4, 5: Equidistant points
- a, b, c, d, e: Points of the terrain profile
- a', b', c', d', e': SAR image representation
- a*, b*, c*, d*, e*: Horizontal distances
- p, q: Terrain points
- p', q': Image representations of the terrain points p, q
- 100: Navigation apparatus
- 101: Image capturing device or SAR system
- 101a: SAR raw data acquiring device or SAR sensor
- 101a': Antenna
- 101b: Altitude detecting device
- 101c: INS acquiring device
- 101d: SAR control device
- 102: Template database
- 103: Correlation device
- 104: Evaluation device
- 104a: Feature selection device
- 104b: Image generating device
- 104c: Image navigation device
- 105: Output interface
- 106: Radar image
- 106a: SAR strips
- 106b: SAR image
- 106c: Processed image
- 107: Template
- 108: Navigation system
- 109: Navigation module
- 111: Position estimating device
- 112: Backup sensor device
- 113, 114, 115: Connecting lines

- 201: Reference elevation
- 202: Terrain profile
- 203: Depression angle
- 204: Radar beams

- 501: Geo-referenced landmark
- 502: Aircraft

- 601: SAR image plane
- 602: Reference plane
- 603: Reference elevation h_ref
- 604: Ground point elevation of ground point a

- 701: Geo-referenced pixel, geoTag_IIa,
- 701': Center pixel
- 702: Corner points, cornerPoints_lla

- 801: In-range direction
- 802: Cross-range direction
- 803: Center line
- 804: Range *gr*_center to the center line
- 805: Landmark elevation *h_center*
- 806: North direction
- 807: Movement direction
- 807': Movement direction projected in the horizontal plane
- 808: Slant range r_center to the center line
- 809: Absolute elevation difference
- 810: Flight altitude h_AC

- 901: Horizontal range *gr_{i,j}* of each pixel of the template
- 902: In-range shift
- 903: Cross-range shift

- 1000: Altitude-ground range diagram
- 1001: Abscissa
- 1002: Ordinate
- 1003: Radar beam
- 1004: Ground component
- 1004e: Delta-east component ground component
- 1004n: Delta-north component ground component
- 1005: Reference elevation
- 1006: Altitude above reference elevation

- 1100: North-east diagram
- 1101: East direction
- 1102: North direction
- 1103: Flight direction

- XX: Image capturing metadata
- YY: Landmark metadata

- *f_{D}*: Doppler shift
- *λ*: Wavelength
- *r*: (Slant) range
- *gr*: Horizontal range/Ground range
- *θ*: Squint angle
- *Δθ*: Squint angle error
- *ϕ*: Depression angle
- *v*: Absolute speed
- *̅v̅*̅: Velocity vector
- *Δv*: Absolute speed error
- *β*: Directional error of speed vector
- *h*: Altitude
- *Δh*: Altitude error
- *s*: Shift of a pixel of the template

## Claims

1. A navigation apparatus (100), in particular for use in an aircraft (502), the navigation apparatus (100) comprising:
an image capturing device (101) ;
a template database (102);
a correlation device (103);
an evaluation device (104); and
an output interface (105);
with the image capturing device (101) being configured to create a radar image (106b) of a surround with a radar antenna (101a') for recording a terrain profile (202) of a terrain;
with the template database (102) being configured to provide at least one template (107) substantially matching the radar image (106b) and containing at least one geo-referenced landmark (501);
wherein the at least one geo-referenced landmark (501) is geo-referenced by way of at least one geo-coordinate;
wherein the correlation device (103) is configured to correlate the at least one geo-referenced landmark (501) present in the at least one template (107) with the radar image (106b) and to provide a position of the at least one geo-referenced landmark (501) in relation to the radar image (106b);
wherein the evaluation device (104) is configured to determine navigation information of the navigation apparatus (100) from the position of the at least one geo-referenced landmark (501) in relation to the radar image, from the at least one geo-coordinate of the at least one geo-referenced landmark (501), and from image capturing metadata (XX) of the image capturing device (101), wherein the image capturing metadata (XX) describes a relative geometry of the radar antenna (101a') in relation to the recorded terrain profile (202); and wherein
the output interface (105) is configured to provide the determined navigation information; **characterized in that**
the template database (102) is configured to normalize the at least one provided template (107) in relation to a rotation present in the radar image (106b) by exploiting the image capturing metadata (XX), in particular the recording geometry, the position of the georeferenced landmark (501), and terrain information of the surround contained in the at least one provided template (107).

2. The navigation apparatus (100) as claimed in claim 1, wherein the normalization is implemented by taking account of a perspective distortion present in the radar image in the normalization of the at least one template (107),, the normalization comprising:
determining perspective distortions caused by the relative geometry of the radar antenna (101a') in relation to the recorded terrain profile (202), wherein distances to points in the radar image (106b) are compared to corresponding points in the recorded terrain profile (202), or a testing of various pose hypotheses about perspective distortions caused by a relative pose of the at least one template (107) in relation to the radar image (106b).

3. The navigation apparatus (100) as claimed in any one of claims 1 or 2, wherein the template database (102) is configured to provide at least one metadatum (YY) which belongs to the at least one geo-referenced landmark (501).

4. The navigation apparatus (100) as claimed in any one of claims 1 to 3, wherein the output interface (105) comprises a navigation system (108) and/or an image processing device for the purposes of fusing the navigation information.

5. The navigation apparatus (100) as claimed in any one of claims 1 to 4, wherein the image capturing metadata (XX) contain a squint angle (*θ*),
the evaluation device (104) being configured to correct the squint angle (*θ*) on the basis of an altitude error (*Δh*)*,* and wherein
the altitude error arises on account of a difference between an assumed reference elevation of the terrain or of the terrain profile (202) and the actual elevation of the georeferenced landmark (501).

6. The navigation apparatus (100) as claimed in claim 5, wherein the evaluation device is configured to access elevation information of the georeferenced landmark (501) derived from at least one metadatum (YY) for the georeferenced landmark (501), a measured altitude (h_AC, 810), and/or an ascertained altitude (h_AC, 810) for the purposes of correcting an error of the squint angle (*θ*) on account of an assumed reference elevation (h_ref, 603) of the terrain profile (202).

7. The navigation apparatus (100) as claimed in any one of claims 1 to 6, wherein the image capturing device (101) is an SAR system.

8. The navigation apparatus (100) as claimed in claim 4, wherein the evaluation device (104) is configured to ascertain a statistical error (*σ_{θ}*, *σᵣ*) of the navigation information relating to an error probability of a measurement error of a measured value of the navigation system (108).

9. An aircraft (502) having a navigation apparatus (100) as claimed in any one of claims 1 to 8.

10. A position determination method for determining the position of an aircraft (502), including:
creating a radar image (106b) of a surround with a radar antenna (101a') for recording a terrain profile (202) of a terrain;
acquiring image capturing metadata (XX) of an image capturing device (101) used to record the radar image of the surround with a radar antenna (101a') for recording a terrain profile (202) of a terrain;
providing at least one template (107) which is substantially matched to the radar image (106b) and which contains at least one geo-referenced landmark (501);
the at least one geo-referenced landmark (501) being geo-referenced by way of at least one geo-coordinate;
correlating the at least one geo-referenced landmark present in the at least one template with the radar image;
providing a position of the at least one geo-referenced landmark (501) in relation to the radar image (106b);
determining navigation information from the position of the at least one geo-referenced landmark (501) in relation to the radar image, from the at least one geo-coordinate of the at least one geo-referenced landmark (501), and from image capturing metadata (XX) of the image capturing device (101), the image capturing metadata (XX) describing a relative geometry of the radar antenna (101a') in relation to the recorded terrain profile (202); and
providing the determined navigation information; the method further **characterized by**
normalizing the at least one provided template (107) in relation to a rotation present in the radar image (106b) by exploiting the image capturing metadata (XX), in particular the recording geometry, the position of the georeferenced landmark (501), and terrain information of the surround contained in the at least one provided template (107).

## Patentansprüche

1. Navigationsvorrichtung (100), insbesondere zur Verwendung in einem Luftfahrzeug (502), wobei die Navigationsvorrichtung (100) umfasst:
eine Bildaufnahmevorrichtung (101);
eine Vorlagendatenbank (102);
eine Korrelationsvorrichtung (103);
eine Auswertungsvorrichtung (104); und
eine Ausgabeschnittstelle (105);
wobei die Bildaufnahmevorrichtung (101) so konfiguriert ist, dass sie mit einer Radarantenne (101a') ein Radarbild (106b) der Umgebung erzeugt, um ein Geländeprofil (202) eines Geländes aufzuzeichnen;
wobei die Vorlagendatenbank (102) so konfiguriert ist, dass sie mindestens eine Vorlage (107) bereitstellt, die im Wesentlichen mit dem Radarbild (106b) übereinstimmt und mindestens einen georeferenzierten Orientierungspunkt (501) enthält;
wobei der mindestens eine georeferenzierte Orientierungspunkt (501) mittels mindestens eines Geokoordinaten georeferenziert ist;
wobei die Korrelationsvorrichtung (103) so konfiguriert ist, dass sie das in der mindestens einen Vorlage (107) vorhandene, georeferenzierte Orientierungspunkt (501) mit dem Radarbild (106b) korreliert und eine Position des mindestens einen georeferenzierten Orientierungspunkts (501) in Bezug auf das Radarbild (106b) bereitstellt;
wobei die Auswertungsvorrichtung (104) so konfiguriert ist, dass sie Navigationsinformationen des Navigationsgeräts (100) aus der Position des mindestens einen georeferenzierten Orientierungspunkts (501) in Bezug auf das Radarbild, aus der mindestens einen Geokoordinate des mindestens einen georeferenzierten Orientierungspunkts (501) sowie aus Bildaufnahme-Metadaten (XX) der Bildaufnahmevorrichtung (101) bestimmt,
wobei die Bildaufnahme-Metadaten (XX) eine relative Geometrie der Radarantenne (101a') in Bezug auf das aufgezeichnete Geländeprofil (202) beschreiben; und
wobei die Ausgabeschnittstelle (105) so konfiguriert ist, dass sie die ermittelten Navigationsinformationen bereitstellt;
**dadurch gekennzeichnet, dass** die Vorlagendatenbank (102) so konfiguriert ist, dass sie die mindestens eine bereitgestellte Vorlage (107) in Bezug auf eine im Radarbild (106b) vorhandene Drehung normalisiert, indem sie die Bildaufnahme-Metadaten (XX), insbesondere die Aufnahmegeometrie, die Position des georeferenzierten Orientierungspunkts (501), sowie Geländeinformationen der Umgebung, die in der mindestens einen bereitgestellten Vorlage (107) enthalten sind.

2. Navigationsvorrichtung (100) nach Anspruch 1, wobei die Normalisierung dadurch durchgeführt wird, dass bei der Normalisierung der mindestens einen Vorlage (107) eine im Radarbild vorhandene perspektivische Verzerrung berücksichtigt wird, wobei die Normalisierung umfasst:
Ermittlung von perspektivischen Verzerrungen, die durch die relative Geometrie der Radarantenne (101a') in Bezug auf das aufgezeichnete Geländeprofil (202) verursacht werden, wobei Entfernungen zu Punkten im Radarbild (106b) mit entsprechenden Punkten im aufgezeichneten Geländeprofil (202) verglichen werden , oder das Testen verschiedener Posenhypothesen bezüglich perspektivischer Verzerrungen, die durch eine relative Pose der mindestens einen Vorlage (107) in Bezug auf das Radarbild (106b) verursacht werden.

3. Navigationsvorrichtung (100) nach einem der Ansprüche 1 oder 2, wobei die Vorlagendatenbank (102) so konfiguriert ist, dass sie mindestens ein Metadatum (YY) bereitstellt, das zu dem mindestens einen georeferenzierten Orientierungspunkt (501) gehört.

4. Navigationsvorrichtung (100) nach einem der Ansprüche 1 bis 3, wobei die Ausgabeschnittstelle (105) ein Navigationssystem (108) und/oder eine Bildverarbeitungsvorrichtung zum Zusammenführen der Navigationsinformationen umfasst.

5. Navigationsvorrichtung (100) nach einem der Ansprüche 1 bis 4, wobei die Bildaufnahme-Metadaten (XX) einen Schielwinkel (*θ*) enthalten,
wobei die Auswertevorrichtung (104) so konfiguriert ist, dass sie den Schielwinkel (*θ*) auf der Grundlage eines Höhenfehlers (*Δh*) korrigiert, und wobei
der Höhenfehler aufgrund einer Differenz zwischen einer angenommenen Referenzhöhe des Geländes oder des Geländeprofils (202) und der tatsächlichen Höhe des georeferenzierten Orientierungspunkts (501) entsteht.

6. Navigationsvorrichtung (100) nach Anspruch 5, wobei die Auswertevorrichtung so konfiguriert ist, dass sie auf Höheninformationen des georeferenzierten Orientierungspunkts (501) zugreift, die aus mindestens einem Metadatum (YY) für den georeferenzierten Orientierungspunkt (501) abgeleitet sind, einer gemessenen Höhe (h_AC, 810) und/oder einer ermittelten Höhe (h_AC, 810) zum Zwecke der Korrektur eines Fehlers des Schielwinkels (*θ*) aufgrund einer angenommenen Referenzhöhe (h_ref, 603) des Geländeprofils (202).

7. Navigationsvorrichtung (100) nach einem der Ansprüche 1 bis 6, wobei die Bildaufnahmevorrichtung (101) ein SAR-System ist.

8. Navigationsvorrichtung (100) nach Anspruch 4, wobei die Auswertevorrichtung (104) so konfiguriert ist, dass sie einen statistischen Fehler (*σ_{θ}* ,*σᵣ*) der Navigationsinformationen ermittelt, der sich auf eine Fehlerwahrscheinlichkeit eines Messfehlers eines Messwerts des Navigationssystems (108) bezieht.

9. Ein Luftfahrzeug (502) mit einer Navigationsvorrichtung (100) nach einem der Ansprüche 1 bis 8.

10. Verfahren zur Positionsbestimmung zur Bestimmung der Position eines Luftfahrzeugs (502), umfassend:
Erzeugen eines Radarbildes (106b) der Umgebung mit einer Radarantenne (101a') zur Erfassung eines Geländeprofils (202) eines Geländes;
Erfassen von Bildaufnahme-Metadaten (XX) einer Bildaufnahmevorrichtung (101), die zur Aufzeichnung des Radarbildes der Umgebung mit einer Radarantenne (101a') zur Erfassung eines Geländeprofils (202) eines Geländes verwendet wird;
Bereitstellen mindestens einer Vorlage (107), die im Wesentlichen an das Radarbild (106b) angepasst ist und mindestens einen georeferenzierten Orientierungspunkt (501) enthält;
wobei der mindestens eine georeferenzierte Orientierungspunkt (501) mittels mindestens einer Geokoordinate georeferenziert ist;
Korrelieren des mindestens einen in der mindestens einen Vorlage vorhandenen georeferenzierten Orientierungspunkts mit dem Radarbild;
Bereitstellen einer Position des mindestens einen georeferenzierten Orientierungspunkts (501) in Bezug auf das Radarbild (106b);
Ermitteln von Navigationsinformationen aus der Position des mindestens einen georeferenzierten Orientierungspunkts (501) in Bezug auf das Radarbild, aus der mindestens einen Geokoordinate des mindestens einen georeferenzierten Orientierungspunkts (501) und aus Bildaufnahme-Metadaten (XX) der Bildaufnahmevorrichtung (101), wobei die Bildaufnahme-Metadaten (XX) eine relative Geometrie der Radarantenne (101a') in Bezug auf das aufgezeichnete Geländeprofil (202) beschreiben; und
Bereitstellen der ermittelten Navigationsinformationen;
wobei das Verfahren ferner **gekennzeichnet ist durch**
Normalisierung der mindestens einer bereitgestellten Vorlage (107) in Bezug auf eine im Radarbild (106b) vorhandene Drehung unter Ausnutzung der Bildaufnahme-Metadaten (XX), insbesondere der Aufnahmegeometrie, der Position des georeferenzierten Orientierungspunkts (501) und der in der mindestens einen bereitgestellten Vorlage (107) enthaltenen Geländeinformationen der Umgebung.

## Revendications

1. Appareil de navigation (100), en particulier destiné à être utilisé dans un aéronef (502), l'appareil de navigation (100) comprenant :
un dispositif de capture d'image (101) ;
une base de données de modèles (102) ;
un dispositif de corrélation (103) ;
un dispositif d'évaluation (104) ; et
une interface de sortie (105) ;
le dispositif de capture d'image (101) étant configuré pour créer une image radar (106b) d'un environnement avec une antenne radar (101a') pour enregistrer un profil de terrain (202) d'un terrain ;
la base de données de modèles (102) étant configurée pour fournir au moins un modèle (107) correspondant sensiblement à l'image radar (106b) et contenant au moins un repère géoréférencé (501) ;
dans lequel le au moins un repère géoréférencé (501) est géoréférencé au moyen d'au moins une géocoordonnée ;
dans lequel le dispositif de corrélation (103) est configuré pour corréler le au moins un repère géoréférencé (501) présent dans le au moins un modèle (107) avec l'image radar (106b) et pour fournir une position du au moins un repère géoréférencé (501) par rapport à l'image radar (106b) ;
dans lequel le dispositif d'évaluation (104) est configuré pour déterminer des informations de navigation de l'appareil de navigation (100) à partir de la position du au moins un repère géoréférencé (501) par rapport à l'image radar, à partir de la au moins une géocoordonnée du au moins un repère géoréférencé (501), et à partir de métadonnées de capture d'image (XX) du dispositif de capture d'image (101),
dans lequel les métadonnées de capture d'image (XX) décrivent une géométrie relative de l'antenne radar (101a') par rapport au profil de terrain (202) enregistré ; et
dans lequel l'interface de sortie (105) est configurée pour fournir les informations de navigation déterminées ;
**caractérisé en ce que** la base de données de modèles (102) est configurée pour normaliser le au moins un modèle (107) fourni par rapport à une rotation présente dans l'image radar (106b) en exploitant les métadonnées de capture d'image (XX), en particulier la géométrie d'enregistrement, la position du repère géoréférencé (501), et des informations de terrain de l'environnement contenues dans le au moins un modèle (107) fourni.

2. Appareil de navigation (100) selon la revendication 1, dans lequel la normalisation est mise en œuvre en tenant compte d'une distortion perspective présente dans l'image radar dans la normalisation du au moins un modèle (107), la normalisation comprenant :
la détermination de distortions perspectives causées par la géométrie relative de l'antenne radar (101a') par rapport au profil de terrain (202) enregistré, dans lequel des distances jusqu'à des points dans l'image radar (106b) sont comparées à des points correspondants dans le profil de terrain (202) enregistré, ou un test de diverses hypothèses de pose concernant des distortions perspectives causées par une pose relative du au moins un modèle (107) par rapport à l'image radar (106b).

3. Appareil de navigation (100) selon l'une quelconque des revendications 1 ou 2, dans lequel la base de données de modèles (102) est configurée pour fournir au moins une métadonnée (YY) qui appartient au-le au moins un repère géoréférencé (501).

4. Appareil de navigation (100) selon l'une quelconque des revendications 1 à 3, dans lequel l'interface de sortie (105) comprend un système de navigation (108) et/ou un dispositif de traitement d'image aux fins de fusionner les informations de navigation.

5. Appareil de navigation (100) selon l'une quelconque des revendications 1 à 4, dans lequel les métadonnées de capture d'image (XX) contiennent un angle de squint (θ),
le dispositif d'évaluation (104) étant configuré pour corriger l'angle de squint (θ) sur la base d'une erreur d'altitude (Δh), et dans lequel
l'erreur d'altitude survient en raison d'une différence entre une élévation de référence supposée du terrain ou du profil de terrain (202) et l'élévation réelle du repère géoréférencé (501).

6. Appareil de navigation (100) selon la revendication 5, dans lequel le dispositif d'évaluation est configuré pour accéder à des informations d'élévation du repère géoréférencé (501) dérivées d'au moins une métadonnée (YY) pour le repère géoréférencé (501), d'une altitude mesurée (h_AC, 810), et/ou d'une altitude déterminée (h_AC, 810) aux fins de corriger une erreur de l'angle de squint (θ) en raison d'une élévation de référence supposée (h_ref, 603) du profil de terrain (202).

7. Appareil de navigation (100) selon l'une quelconque des revendications 1 à 6, dans lequel le dispositif de capture d'image (101) est un système SAR.

8. Appareil de navigation (100) selon la revendication 4, dans lequel le dispositif d'évaluation (104) est configuré pour déterminer une erreur statistique (σ_{θ}, σᵣ) des informations de navigation liée à une probabilité d'erreur d'une erreur de mesure d'une valeur mesurée du système de navigation (108).

9. Aéronef (502) comportant un appareil de navigation (100) selon l'une quelconque des revendications 1 à 8.

10. Procédé de détermination de position pour déterminer la position d'un aéronef (502), comprenant :
créer une image radar (106b) d'un environnement avec une antenne radar (101a') pour enregistrer un profil de terrain (202) d'un terrain ;
acquérir des métadonnées de capture d'image (XX) d'un dispositif de capture d'image (101) utilisé pour enregistrer l'image radar de l'environnement avec une antenne radar (101a') pour enregistrer un profil de terrain (202) d'un terrain ;
fournir au moins un modèle (107) qui correspond sensiblement à l'image radar (106b) et qui contient au moins un repère géoréférencé (501) ;
le au moins un repère géoréférencé (501) étant géoréférencé au moyen d'au moins une géocoordonnée ;
corréler le au moins un repère géoréférencé présent dans le au moins un modèle avec l'image radar ;
fournir une position du au moins un repère géoréférencé (501) par rapport à l'image radar (106b) ;
déterminer des informations de navigation à partir de la position du au moins un repère géoréférencé (501) par rapport à l'image radar, à partir de la au moins une géocoordonnée du au moins un repère géoréférencé (501), et à partir de métadonnées de capture d'image (XX) du dispositif de capture d'image (101), les métadonnées de capture d'image (XX) décrivant une géométrie relative de l'antenne radar (101a') par rapport au profil de terrain (202) enregistré ; et
fournir les informations de navigation déterminées ;
le procédé étant en outre **caractérisé par**
la normalisation du au moins un modèle (107) fourni par rapport à une rotation présente dans l'image radar (106b) en exploitant les métadonnées de capture d'image (XX), en particulier la géométrie d'enregistrement, la position du repère géoréférencé (501), et des informations de terrain de l'environnement contenues dans le au moins un modèle (107) fourni.
